# EUROPÄISCHE PATENTSCHRIFT

(11) **EP 4 491 340 B1**
(45) Veröffentlichungstag und Bekanntmachung des Hinweises auf die Patenterteilung: **18.03.2026**
(21) Anmeldenummer: 24187145.8
(22) Anmeldetag: 08.07.2024
(51) Int. Cl.: B25F 5/00, B25F 5/02, B27B 17/00

(54) **HANDGEFÜHRTES ARBEITSGERÄT**
HAND-HELD WORK DEVICE
OUTIL MANUEL

(30) Priorität: 10.07.2023 DE 102023118179; 10.07.2023 DE 102023118171; 10.07.2023 DE 102023118186
(43) Veröffentlichungstag der Anmeldung: 15.01.2025
(73) Patentinhaber: Andreas Stihl AG & Co. KG, 71336 Waiblingen (DE)
(72) Erfinder: Heinzelmann, Georg, 71394 Winnenden (DE); Renz, Johann-Sebastian, 72810 Gomaringen (DE); Weber, Marco, 71522 Backnang (DE)
(74) Vertreter: Karzel, Philipp

(56) Entgegenhaltungen:
- EP-B1- 2 431 132
- DE-A1- 102015 225 748
- DE-U1- 202019 104 914

## Beschreibung

Die Erfindung betrifft ein handgeführtes Arbeitsgerät nach dem Oberbegriff des Anspruchs 1.

Aus der DE 20 2019 104 914 U1 ist eine Motorkettensäge bekannt, bei der die Eintrittsöffnung für Kühlluft an einer Seitenfläche vorgesehen ist. Die Seitenfläche erstreckt sich in etwa parallel zur Werkzeugebene, in der die nicht dargestellte Sägekette umläuft. Damit zwischen dem Bügelgriff und dem Luftfilter genügend Platz für die Hand eines Benutzers ist, muss der Bügelgriff ausladend gestaltet sein. Dadurch ist das Arbeitsgerät sperrig und unhandlich. Insbesondere bei einem Fällschnitt ist die Eintrittsöffnung nach oben orientiert, so dass durch die Eintrittsöffnung Schmutz unter der Einwirkung der Schwerkraft in das Innere der Motorkettensäge vordringen kann. Dokument DE 20 2019 104914 U1 offenbart ein handgeführtes Arbeitsgerät gemäß dem Oberbegriff des Patentanspruchs 1 und ein handgeführtes Arbeitsgerät gemäß dem Oberbegriff des Patentanspruchs 12.

Aus der EP 2 431 132 B1 und der DE 10 2015 225 748 A1 sind Arbeitsgeräte mit seitlichem Lufteintritt bekannt.

Der Erfindung liegt die Aufgabe zugrunde, ein gattungsgemäßes Arbeitsgerät derart weiterzubilden, dass das Arbeitsgerät kompakt und ergonomisch gestaltet ist. Diese Aufgabe wird durch ein handgeführtes Arbeitsgerät mit den Merkmalen des Anspruchs 1 gelöst.

Der Erfindung liegt weiterhin die Aufgabe zugrunde, ein gattungsgemäßes Arbeitsgerät derart weiterzubilden, dass der Schmutzeintritt in das Arbeitsgerät bei gleichzeitig guter Kühlung des Arbeitsgeräts gering ist.

Diese Aufgabe wird durch ein handgeführtes Arbeitsgerät mit den Merkmalen des Anspruchs 12 gelöst.

Gemäß Anspruch 1 ist das Luftfilterbauteil an der Seitenfläche des Arbeitsgeräts angeordnet. Das Luftfilterbauteil weist in Längsrichtung eine Filterlängserstreckung auf, in der sich das Luftfilterbauteil erstreckt. Insbesondere ist der Bereich der Filterlängserstreckung durch eine bezüglich der Längsrichtung hintere Ebene und durch eine bezüglich der Filterlängserstreckung vordere Ebene begrenzt. Eine gedachte Tangentialebene verläuft in der Abstellposition des Arbeitsgeräts senkrecht zur Horizontalebene. In der Abstellposition tangiert die Tangentialebene die Seitenfläche des Arbeitsgeräts, insbesondere eine Außenseite der Seitenfläche, im Bereich der Filterlängserstreckung lediglich. Die Tangentialebene schneidet die Seitenfläche des Arbeitsgeräts im Bereich der Filterlängserstreckung demnach nicht. Die Tangentialebene kann aber durchaus andere Bereiche des Arbeitsgeräts, insbesondere andere Bereiche der Seitenfläche schneiden.

Die Filterlängserstreckung besitzt bezüglich der Längsrichtung eine vordere Hälfte und eine hintere Hälfte. Die vordere Hälfte ist bezüglich der Längsrichtung vor der hinteren Hälfte angeordnet. Insbesondere ist die vordere Hälfte bezüglich der Längsrichtung weiter entfernt vom Bediengriff als die hintere Hälfte.

Erfindungsgemäß tangiert die Tangentialebene die Seitenfläche im Bereich der hinteren Hälfte. Insbesondere tangiert die Tangentialebene die Seitenfläche im Bereich der vorderen Hälfte der Filterlängserstreckung nicht. Die Tangentialebene schneidet die Werkzeugebene bezüglich der Längsrichtung vor dem Bereich der Filterlängserstreckung, insbesondere vor bezüglich der Längsrichtung vor dem Filterbauteil.

Insbesondere läuft das Werkzeug in der Werkzeugebene um. Insbesondere laufen die Werkzeugebene und die Tangentialebene vom Bediengriff aus in Richtung Werkzeug gesehen zusammen.

Erfindungsgemäß weist das Arbeitsgerät einen bezüglich der Längsrichtung im Bereich der Filterlängserstreckung angeordneten Aufnahmeschacht für einen in einer Einschubrichtung durch eine Aufnahmeöffnung des Aufnahmeschachts in den Aufnahmeschacht einschiebbaren Akkupack auf oder das Arbeitsgerät umfasst einen Bügelgriff mit einem Bügelabschnitt, der im Bereich der Filterlängserstreckung und in Richtung senkrecht zur Werkzeugebene über der Seitenfläche liegt.

Durch die erfindungsgemäße Ausführung des Arbeitsgeräts ist eine kompakte und ergonomische Gestaltung des Arbeitsgeräts möglich. Dadurch, dass der Eintrittsraum nicht über die spitz zur Werkezugebene verlaufende Tangentialebene hervorsteht, ist auf der anderen Seite der Tangentialebene im Bereich des Eintrittsraums Bauraum für andere Bauteile des Arbeitsgeräts vorhanden. Beispielsweise kann dort ein Bügelgriff angeordnet werden. Das Luftfilterbauteil kann seitlich angeordnet werden und von einem Bügelgriff übergriffen werden und dennoch kann das Arbeitsgerät kompakt und ergonomisch gestaltet sein. Im Bereich der hinteren Hälfte der Filterlängserstreckung steht im Inneren eines Grundkörpers des Arbeitsgerät Bauraum zur Verfügung. Hier kann beispielsweise ein Akkuschacht für einen Akkupack angeordnet werden.

Vorteilhaft schließt die Tangentialebene mit der Werkzeugebene einen Winkel von mindestens 1°, insbesondere von mindestens 3° ein. Insbesondere ist das Luftfilterbauteil innerhalb des Bereichs dieses Winkels angeordnet. Zweckmäßig schließt die Tangentialebene mit der Werkzeugebene einen Winkel von höchstens 45°, insbesondere von höchstens 20° ein. Durch die Tangentialebene und die Werkzeugebene ist ein Winkelbereich begrenzt, innerhalb dessen das Luftfilterbauteil angeordnet ist. Das Luftfilterbauteil ragt nicht aus diesem Winkelbereich hervor. Insbesondere ragt die Seitenfläche im Bereich der Filterlängserstreckung nicht aus diesem Winkelbereich hervor. Dadurch ist eine kompakte Gestaltung des Arbeitsgeräts möglich.

Vorteilhaft nimmt ein Außenseitenabstand einer Außenseite der Seitenfläche zu der Werkzeugebene im Bereich der Filterlängserstreckung des Luftfilterbauteils in Längsrichtung ab. Der Außenseitenabstand ist senkrecht zur Werkzeugebene gemessen. Der Außenseitenabstand ist die Entfernung der Außenseite der Seitenfläche zu der Werkzeugebene im Bereich der Filterlängserstreckung des Luftfilterbauteils. Insbesondere verändert sich der Außenseitenabstand entlang der Längsrichtung. Der Außenseitenabstand ist demnach kein Abstand im geometrischen Sinn, sondern eine lokal veränderliche Größe. Insbesondere nimmt der Außenseitenabstand in Längsrichtung im Wesentlichen kontinuierlich ab.

Zumindest gemäß der zweiten Alternative der Erfindung umfasst das Arbeitsgerät den Bügelgriff. Der Bügelgriff weist einen Bügelabschnitt auf, der im Bereich der Filterlängserstreckung und in Richtung senkrecht zur Werkzeugebene über der Seitenfläche liegt. Insbesondere liegt der Bügelabschnitt auf einer ersten Seite der Werkzeugebene. Auf der ersten Seite der Werkzeugebene liegt auch das Luftfilterbauteil. Insbesondere erstreckt sich der Bügelabschnitt in Richtung quer zu der Richtung, die senkrecht zur Werkzeugebene verläuft. Insbesondere erstreckt sich die Längsrichtung des Bügelabschnitts in Richtung parallel zur Werkzeugebene.

Zweckmäßig ist der Außenseitenabstand bezüglich der Längsrichtung im Bereich des Bügelabschnitts des Bügelgriffs minimal. Dadurch kann bezüglich der Längsrichtung im Bereich des Bügelabschnitts ausreichend Platz zum Umgreifen des Bügelgriffs durch einen Benutzer geschaffen sein. Gleichzeitig kann der Bügelgriff bauraumsparend angeordnet sein. Der kleine Außenseitenabstand im Bereich des Bügelabschnitts ermöglicht eine Anordnung des Bügelgriffs, insbesondere des Bügelabschnitts so, dass das Arbeitsgerät kompakt und ergonomisch gestaltet ist. Hierdurch können die Schwenkkräfte für den Benutzer auf ein kleineres Maß reduziert werden, so dass die Ergonomie des Arbeitsgerätes, insbesondere einer Motorsäge verbessert ist.

Die Außenseite der Seitenfläche besitzt einen Abstandsbereich. Der Abstandsbereich liegt in Richtung senkrecht zur Werkzeugebene unterhalb des Bügelabschnitts. Insbesondere weist der Bügelgriff im Bügelabschnitt einen senkrecht zur Werkzeugebene gemessenen Bügelüberstand über den Abstandsbereich auf. Der Bügelabschnitt des Bügelgriffs steht um den Bügelüberstand über die Außenseite der Seitenfläche in dem Bereich der Seitenfläche hervor, die senkrecht zur Werkzeugebene unterhalb des Bügelabschnitts liegt. Dieser Bereich der Seitenfläche ist der Abstandsbereich. Der Bügelüberstand wird auch als Bügelabstand bezeichnet. Insbesondere ist der Bügelüberstand ein geometrischer Abstand, gibt also die Länge der kürzesten, in Richtung senkrecht zur Werkzeugebene verlaufenden "Abstandslinie" an. Der Bügelabstand ist senkrecht zur Werkzeugebene gemessen. Der Bügelabstand entspricht dem senkrecht zur Werkzeugebene gemessenen Abstand des Bügelabschnitts des Bügelgriffs zur Außenseite der Seitenfläche des Arbeitsgeräts, insbesondere zu dem Bereich der Außenseite der Seitenfläche, der senkrecht zur Werkzeugebene unterhalb des Bügelabschnitts liegt, insbesondere zu dem Abstandsbereich.

Der Bügelgriff weist im Bügelabschnitt einen senkrecht zur Werkzeugebene gemessenen Schwerpunktabstand zu dem Masseschwerpunkt des Arbeitsgeräts auf. Auch der Schwerpunktabstand ist ein Abstand im geometrischen Sinn. Vorteilhaft beträgt der Bügelüberstand von 20% bis 60%, insbesondere von 30% bis 50%, bevorzugt von 35% bis 45% des Schwerpunktabstands. Dadurch kann der Bügelgriff, insbesondere der Bügelabschnitt des Bügelgriffs nahe am Masseschwerpunkt des Arbeitsgeräts angeordnet sein. Dadurch, dass der Außenseitenabstand bezüglich der Längsrichtung im Bereich des Bügelabschnitts klein, insbesondere minimal ist, ist auch bei einem kleinen Verhältnis von Bügelüberstand zu Schwerpunkabstand ein Umgreifen des Bügelgriffs im Bügelabschnitt möglich. Dies ermöglicht gleichzeitig eine kompakte Gestaltung des Arbeitsgeräts und ein ergonomisches Führen und Tragen des handgeführten Arbeitsgeräts mittels des Bügelgriffs. Da der Bügelgriff nahe am Massenschwerpunkt liegt, sind die Hebelkräfte zum Führen und Tragen des Arbeitsgeräts mittels des Bügelgriffs klein. Insbesondere beträgt der Schwerpunktabstand von 9 cm bis 15 cm, zweckmäßig von 11 cm bis 13 cm. Es kann auch vorgesehen sein, dass der Schwerpunktabstand von 8 cm bis 12 cm, insbesondere von 9 cm bis 11 cm beträgt.

In vorteilhafter Weiterbildung der Erfindung umfasst das Arbeitsgerät einen Eintrittsraum zum Eintritt von durch das Luftfilterbauteil zu filternder Kühlluft in das Arbeitsgerät. Es kann aber auch eine Gestaltung des Arbeitsgeräts ohne Eintrittsraum vorgesehen sein. Der Eintrittsraum ist zweckmäßig durch die Seitenfläche, insbesondere durch eine Innenseite der Seitenfläche begrenzt. Insbesondere erstreckt sich der Eintrittsraum bezüglich der Längsrichtung zumindest auch im Bereich der Filterlängserstreckung. Zweckmäßig tangiert die Tangentialebene die Seitenfläche im Bereich der hinteren Hälfte der Filterlängserstreckung in einem Bereich der Seitenfläche der den Eintrittsraum begrenzt. Insbesondere tangiert die Tangentialebene die Außenseite eines Bereichs der Seitenfläche, deren Innenseite den Eintrittsraum unmittelbar begrenzt. Vorteilhaft besitzt der Eintrittsraum eine Eintrittsöffnung, durch die Kühlluft von außen in Längsrichtung in den Eintrittsraum strömen kann.

Dadurch, dass die Kühlluft in Längsrichtung durch die Eintrittsöffnung strömt, kann das Arbeitsgerät so gestaltet sein, dass Öffnungen für den Eintritt von Kühlluft unmittelbar von der Außenseite in das Arbeitsgerät in Richtung senkrecht zu einer Werkzeugebene des Arbeitsgeräts nur in geringem Maß oder gar nicht vorhanden sind. Insbesondere kann die Eintrittsöffnung so gestaltet sein, dass sie hauptsächlich in Richtung entgegen der Längsrichtung öffnet. Zweckmäßig kann der Anteil der Fläche der Eintrittsöffnung, die in einer Seitenansicht senkrecht auf die Werkzeugebene des Arbeitsgeräts sichtbar ist, sehr klein gestaltet sein. Dadurch kann nur sehr wenig Schnittgut vom Werkzeug zu der Eintrittsöffnung vordringen und in das Arbeitsgerät eintreten. Das Werkzeug ist insbesondere am in Längsrichtung vorderen Ende des handgeführten Arbeitsgeräts angeordnet. Da die Eintrittsöffnung zum bezüglich der Längsrichtung hinteren Ende des Arbeitsgeräts hin öffnet, ist der Schmutzeintrag von vom Werkzeug während des Einsatzes des handgeführten Arbeitsgeräts erzeugten Schmutz in das Arbeitsgerät durch die Eintrittsöffnung für Kühlluft hindurch gering. Insbesondere bei einem Fällschnitt kann nur eine geringe Menge an Schmutzpartikeln, auf die die Schwerkraft wirkt, durch die Eintrittsöffnung für Kühlluft in das Arbeitsgerät eintreten. Auf diese Weise ist der Eintritt von Schmutz durch die Eintrittsöffnung für Kühlluft sehr gering.

In vorteilhafter Weiterbildung der Erfindung weist das Arbeitsgerät einen Filterdeckel auf. Es kann aber auch eine Gestaltung des Arbeitsgeräts ohne Filterdeckel vorgesehen sein. Insbesondere ist die Eintrittsöffnung für Kühlluft in dem Filterdeckel ausgebildet. Dadurch ist eine einfache Herstellung der Eintrittsöffnung möglich. Insbesondere kann der Filterdeckel in dem Teil, in dem er keine Eintrittsöffnung aufweist, eine Öffnung des Arbeitsgeräts abdecken, in, auf oder an der der Filter angeordnet ist. Vorteilhaft bildet der Filterdeckel einen Teil der Außenwand. Zweckmäßig bildet der Filterdeckel einen Teil der Seitenfläche, insbesondere im Bereich der Filterlängserstreckung. Zweckmäßig tangiert die Tangentialebene die Seitenfläche im Bereich der hinteren Hälfte der Filterlängserstreckung in einem Bereich der Seitenfläche der durch den Filterdeckel gebildet ist. Insbesondere tangiert die Tangentialebene den Filterdeckel, insbesondere die Außenseite des Filterdeckels, im Bereich der hinteren Hälfte der Filterlängserstreckung des Luftfilterbauteils.

Vorteilhaft ist die Eintrittsöffnung, insbesondere eine Öffnung eines Innenraums des Arbeitsgeräts an der Seitenfläche des Arbeitsgeräts angeordnet. Dadurch ist die Eintrittsöffnung auf einfache Weise zugänglich. Dadurch kann die Eintrittsöffnung, insbesondere die Fläche des Luftfilters groß gestaltet sein. Die Seitenfläche des Arbeitsgeräts bietet hierfür ausreichend Platz.

Vorteilhaft ist der Filterdeckel in Ansicht senkrecht auf die Horizontalebene in der Abstellposition im Wesentlichen keilförmig.

Zweckmäßig dient der Filterdeckel zur Halterung des Luftfilterbauteils auf. Insbesondere deckt der Filterdeckel das Luftfilterbauteil zumindest teilweise, vorteilhaft in Seitenansicht in Richtung senkrecht auf die erste Seite der Werkzeugebene vollständig ab. Zweckmäßig ist das Luftfilterbauteil zwischen dem Filterdeckel und dem Grundkörper des Arbeitsgeräts gehalten.

Insbesondere ist das Luftfilterbauteil mit Spiel zwischen dem Filterdeckel und dem Grundkörper des Arbeitsgeräts gehalten. Dadurch ist eine einfache Herstellung des Arbeitsgeräts möglich. Der Filterdeckel kann gegen den Grundkörper gepresst werden und am Grundkörper anliegen ohne dass hierfür das Luftfilterbauteil bei den Herstellungstoleranzen berücksichtigt werden muss. Dadurch, dass der Filterdeckel gegen den Grundkörper gepresst werden kann, können geringen Anforderung an die Fertigungstoleranzen bezüglich der Relativlage von Grundkörper und Filterdeckel gestellt werden und dennoch der Filterdecke verlässlich dicht am Grundkörper anliegen.

Zweckmäßig ist der Filterdeckel und/oder das Luftfilterbauteil durch ein einziges Befestigungselement an dem Grundkörper befestigbar. Dadurch kann der Filterdeckel und/oder das Luftfilterbauteil dicht, insbesondere luftdicht, an dem Grundkörper anliegen. Insbesondere handelt es sich bei dem einzigen Befestigungselement um ein zentrales Befestigungselement. Vorteilhaft ist das Befestigungselement in der Seitenansicht senkrecht auf die Werkzeugebene, insbesondere auf die erste Seite der Werkzeugebene in etwa in der Mitte des Filterdeckels, insbesondere im Flächenschwerpunkt der der Filteraußenkontur zugeordneten ebenen Fläche befestigbar. Dadurch, dass der Filterdeckel und/oder das Luftfilterbauteil durch ein einziges Befestigungselement befestigbar ist, kann der Filterdeckel und/oder das Luftfilterbauteil auf einfache und komfortable Weise montiert und demontiert werden. Das Luftfilterbauteil ist schnell demontierbar und auf einfache Weise, beispielsweise für Reinigungszwecke, zugänglich.

Zweckmäßig verbindet das Befestigungselement den Grundkörper des Arbeitsgeräts und den Filterdeckel miteinander. Insbesondere ist im Bereich des Befestigungselements ein erster Anschlagbereich für das Luftfilterbauteil am Grundkörper angeordnet. Vorteilhaft ist ein zweiter Anschlagbereich für das Luftfilterbauteil am Filterdeckel angeordnet. Insbesondere ist das Luftfilterbauteil mit Spiel in Richtung vom ersten Anschlagbereich zum zweiten Anschlagbereich zwischen dem ersten Anschlagbereich und dem zweiten Anschlagbereich gehalten. Dadurch kann der Filterdeckel auch bei geringen Anforderungen an die Fertigungstoleranzen verlässlich gehalten sein und gleichzeitig kann der Filterdeckel dicht gegen den Grundkörper gepresst werden.

Zumindest gemäß der ersten Alternative der Erfindung weist das Arbeitsgerät einen Aufnahmeschacht für einen Akkupack auf. Der Akkupack ist in einer Einschubrichtung durch eine Aufnahmeöffnung des Aufnahmeschachts in den Aufnahmeschacht einschiebbar. Insbesondere verläuft die Einschubrichtung parallel zur Werkzeugebene. Zumindest gemäß der ersten Alternative der Erfindung ist der Aufnahmeschacht bezüglich der Längsrichtung im Bereich der Filterlängserstreckung angeordnet. Vorteilhaft ist der der Aufnahmeschacht bezüglich der Längsrichtung im Bereich der hinteren Hälfte der Filterlängserstreckung angeordnet. Durch das erfindungsgemäße tangieren der Tangentialeben der Seitenfläche im Bereich der hinteren Hälfte und das Schneiden der Werkzeugebene durch die Tangentialebene bezüglich der Längsrichtung vor der Filterlängserstreckung ist im Bereich der hinteren Hälfte der Filterlängserstreckung ausreichend Platz für den Aufnahmeschacht. Gleichzeitig ist im Bereich der vorderen Hälfte der Filterlängserstreckung außerhalb des Grundkörpers des Arbeitsgeräts ausreichend Platz für die Anordnung eines Griffraums, in den der Benutzer mit den Fingern seiner Hand greifen kann. Der Bügelabschnitt kann nah am Grundkörper angeordnet sein wodurch das Arbeitsgerät auch bei einem großen Akkuschacht kompakt und ergonomisch gestaltet werden kann.

Der Aufnahmeschacht besitzt eine in Längsrichtung gemessene Tiefe und eine senkrecht zur Werkzeugebene gemessene Breite. Insbesondere ist die Breite größer als die Tiefe. Insbesondere beträgt die Breite mindestens 50%, insbesondere mindestens 60%, einer in Richtung senkrecht zur Werkzeugebene gemessenen maximalen Breite des Grundkörpers des Arbeitsgeräts. Insbesondere weist der Grundkörper des Arbeitsgeräts die maximale Breite in der hinteren Hälfte der Filterlängserstreckung auf. Dadurch kann ein großer Akkupack in dem Akkuschacht untergebracht werden.

Zweckmäßig ist vorgesehen, dass sich eine gedachte Projektion des Luftfilterbauteils in Richtung senkrecht zur Werkzeugebene auf die Werkzeugebene und eine gedachte Projektion des Aufnahmeschachts in Richtung senkrecht zur Werkzeugebene auf die Werkzeugebene in der Werkzeugebene überlappen.

Zweckmäßig ist die Seitenfläche frei von der Aufnahmeöffnung eines Aufnahmeschacht für einen Akku. Dadurch kann das Luftfilterbauteil, insbesondere die Filterfläche des Luftfilterbauteils besonders groß gestaltet sein. Für eine Aufnahmeöffnung eines Aufnahmeschachts muss an der Seitenfläche kein Platz vorgesehen sein.

Der Eintrittsraum begrenzt einen Abschnitt eines Strömungspfads für die Kühlluft. Der Strömungspfad für Kühlluft verläuft ausgehend von der Eintrittsöffnung zu dem Motor des handgeführten Arbeitsgeräts zum Antrieb des Werkzeugs. Insbesondere führt der Strömungspfad durch den Eintrittsraum hindurch. Der Eintrittsraum besitzt entlang des Strömungspfads Strömungsquerschnitte für die Kühlluft. Insbesondere passiert die Kühlluft die Strömungsquerschnitte beim Durchströmen des Eintrittsraum. Die Strömungsquerschnitte verlaufen senkrecht zur Längsrichtung, insbesondere in Ebenen. Insbesondere verlaufen die Strömungsquerschnitt quer zum Strömungspfad.

Insbesondere begrenzt das Luftfilterbauteil sämtliche Strömungsquerschnitte. Dies bewirkt, dass die Kühlluft entlang der Filterfläche des Luftfilterbauteils strömt. Das Arbeitsgerät kann dann so gestaltet sein, dass der Eintritt in einen Reinluftraum der Arbeitsgeräts, insbesondere in den Innenraum eines Gehäuses des Grundkörpers des Arbeitsgeräts erfolgt, während die Kühlluft nach dem Eintritt in das Arbeitsgerät durch die Eintrittsöffnung in Längsrichtung an der Außenseite des Reinluftraums, insbesondere des Innenraums, insbesondere an einer Öffnung des Reinluftraums, insbesondere des Innenraums entlang strömt, insbesondere in dem Eintrittsraum entlang strömt. Bei diesem Entlangströmen kann aus einer sich in Längsrichtung erstreckenden Öffnung des Eintrittsraums, in, an oder auf der das Luftfilterbauteil angeordnet ist, sukzessive Kühlluft in den Reinluftraum, insbesondere den Innenraum des Gehäuses, eintreten, so dass das Volumen der Kühlluft, die noch nicht in den Reinluftraum, insbesondere den Innenraum eingetreten ist, während des Entlangströmens in Längsrichtung abnimmt. Daher nimmt der Volumenstrom der Kühlluft in Längsrichtung ab. Dadurch ergibt sich das Problem, dass der Strömungsfluss, insbesondere der Volumenstrom ungleichmäßig ist. Ohne weitere Maßnahme nimmt der Strömungsfluss, insbesondere der Volumenstrom entlang des Strömungspfads mit größerer Entfernung von der Eintrittsöffnung, insbesondere vor Eintritt in den Reinluftraum, insbesondere den Innenraum des Gehäuses, ab. Um dennoch eine gute, gleichmäßige Kühlwirkung zu erreichen, kann vorgesehen sein, dass die Strömungsquerschnitte des Eintrittsraums in Längsrichtung kleiner werden. Dadurch kann ein gleichmäßiger Strömungsfluss, insbesondere ein gleichmäßiger Volumenstrom erreicht werden. Dadurch wird eine gute, gleichmäßige Kühlwirkung erzielt. Dadurch wird die gesamte Filterfläche gleichmäßig zugesetzt. Dies erhöht die Standzeit des Luftfilters.

Vorteilhaft ist vorgesehen, dass die Strömungsquerschnitte in Richtung des Strömungspfads kontinuierlich kleiner werden.

In vorteilhafter Weiterbildung der Erfindung erstreckt sich der Eintrittsraum ausgehend von der Eintrittsöffnung in Längsrichtung. Dadurch tritt der Effekt des gleichmäßigen Strömungsflusses bereits nach Eintritt der Kühlluft durch die Eintrittsöffnung ein. Zweckmäßig ist der Eintrittsraum zumindest an einer Seite von einer Außenwand des Arbeitsgeräts begrenzt. Insbesondere begrenzt die Innenseite der Außenwand den Eintrittsraum.

In vorteilhafter Weiterbildung ist das Arbeitsgerät so ausgelegt, dass die Kühlluft im Eintrittsraum entlang einer Filterfläche des Luftfilterbauteils strömt. Insbesondere ist das Arbeitsgerät so ausgelegt, dass die Kühlluft während des Entlangströmens entlang der Filterfläche nach und nach durch das Luftfilterbauteil in einen Reinluftraum des Arbeitsgeräts eintritt.

Durch eine Abnahme des Außenseitenabstands in Längsrichtung kann die Verkleinerung der Strömungsquerschnitte des Eintrittsraums auf einfache Weise realisiert werden.

Insbesondere begrenzt der Filterdeckel den Eintrittsraum. Durch die oben beschriebene Keilform des Filterdeckels kann die Reduzierung der Strömungsquerschnitte des Eintrittsraum in Längsrichtung auf einfache Weise umgesetzt sein. Insbesondere ist der Eintrittsraum durch den Filterdeckel und das Luftfilterbauteil ausgebildet. Insbesondere weist der Eintrittsraum an seinem einen Ende die Eintrittsöffnung für Kühlluft auf. Zweckmäßig ist das andere Ende des Eintrittsraum für den Austritt von Kühlluft in den Innenraum des Arbeitsgeräts vollständig durch das Luftfilterbauteil gebildet, insbesondere durch das Luftfilterbauteil vollständig bedeckt.

Das Arbeitsgerät besitzt eine Aufwärtsrichtung. Die Aufwärtsrichtung erstreckt sich in Richtung quer, insbesondere senkrecht zur Längsrichtung. Die Aufwärtsrichtung erstreckt sich insbesondere in Richtung parallel zur Werkzeugebene. Wenn das Arbeitsgerät auf der Horizontalebene in der dafür vorgesehenen Abstellposition abgestellt ist, erstreckt sich die Aufwärtsrichtung zweckmäßig senkrecht zur Horizontalebene. Die Aufwärtsrichtung verläuft insbesondere in Richtung vom Boden des Arbeitsgeräts hin zur Gehäusedecke des Arbeitsgeräts.

Es kann vorgesehen sein, dass das Luftfilterbauteil in einem Winkel von mindestens 5°, insbesondere von höchstens 40°, gegen die Aufwärtsrichtung, insbesondere gegen die Werkzeugebene, geneigt ist. Zweckmäßig erstreckt sich das Luftfilterbauteil im Wesentlichen in einer Ebene. Insbesondere nimmt der Abstand des Luftfilterbauteils zur Werkzeugebene in Aufwärtsrichtung zu. Bei diesem Abstand handelt es sich um einen lokalen Abstand einzelner Punkte des Luftfilterbauteils zur Werkzeugebene. Eine derart geneigte Anordnung des Luftfilterbauteils verbessert dessen Selbstreinigung.

Zur Lösung der weiteren Aufgabe ist gemäß Anspruch 12 vorgesehen, dass der Eintrittsraum mindestens eine Eintrittsöffnung für den Eintritt von Kühlluft in das Arbeitsgerät aufweist. Das Luftfilterbauteil begrenzt den Eintrittsraum. Der Eintrittsraum begrenzt einen Abschnitt eines Strömungspfads für die Kühlluft. Der Strömungspfad für Kühlluft verläuft ausgehend von der Eintrittsöffnung zu dem Motor des handgeführten Arbeitsgeräts zum Antrieb des Werkzeugs. Insbesondere führt der Strömungspfad durch den Eintrittsraum hindurch. Der Eintrittsraum besitzt entlang des Strömungspfads Strömungsquerschnitte für die Kühlluft. Insbesondere passiert die Kühlluft die Strömungsquerschnitte beim Durchströmen des Eintrittsraum. Die Strömungsquerschnitte verlaufen senkrecht zur Längsrichtung, insbesondere in Ebenen. Insbesondere verlaufen die Strömungsquerschnitt quer zum Strömungspfad.

Gemäß der Erfindung nach Anspruch 12 ist die Eintrittsöffnung so angeordnet, dass Kühlluft in Längsrichtung durch die Eintrittsöffnung strömen kann. Dadurch, dass die Kühlluft in Längsrichtung durch die Eintrittsöffnung strömt, kann das Arbeitsgerät so gestaltet sein, dass Öffnungen für den Eintritt von Kühlluft in das Arbeitsgerät in Richtung senkrecht zu einer Werkzeugebene des Arbeitsgeräts nur in geringem Maß oder gar nicht vorhanden sind. Insbesondere läuft das Werkzeug in der Werkzeugebene um. Insbesondere kann die Eintrittsöffnung so gestaltet sein, dass sie hauptsächlich in Richtung entgegen der Längsrichtung öffnet. Zweckmäßig kann der Anteil der Fläche der Eintrittsöffnung, die in einer Seitenansicht, insbesondere auf eine erste Seite der Werkzeugebene, auf der auch das Luftfilterbauteil angeordnet ist, senkrecht auf die Werkzeugebene des Arbeitsgeräts sichtbar ist, sehr klein gestaltet sein. Dadurch kann nur sehr wenig Schnittgut vom Werkzeug zu der Eintrittsöffnung vordringen und in das Arbeitsgerät eintreten. Das Werkzeug ist insbesondere am in Längsrichtung vorderen Ende des handgeführten Arbeitsgeräts angeordnet. Da die Eintrittsöffnung zum bezüglich der Längsrichtung hinteren Ende des Arbeitsgeräts hin öffnet, ist der Schmutzeintrag von vom Werkzeug während des Einsatzes des handgeführten Arbeitsgeräts erzeugten Schmutz in das Arbeitsgerät durch die Eintrittsöffnung für Kühlluft hindurch gering. Insbesondere bei einem Fällschnitt kann nur eine geringe Menge an Schmutzpartikeln, auf die die Schwerkraft wirkt, durch die Eintrittsöffnung für Kühlluft in das Arbeitsgerät eintreten. Auf diese Weise ist der Eintritt von Schmutz durch die Eintrittsöffnung für Kühlluft sehr gering.

Weiterhin begrenzt das Luftfilterbauteil sämtliche Strömungsquerschnitte. Dies bewirkt, dass die Kühlluft entlang einer Filterfläche des Luftfilterbauteils strömt. Das Arbeitsgerät kann dann so gestaltet sein, dass der Eintritt in einen Reinluftraum, insbesondere einen Innenraum eines Gehäuses des Arbeitsgeräts erfolgt, während die Kühlluft nach dem Eintritt in das Arbeitsgerät durch die Eintrittsöffnung in Längsrichtung an der Außenseite des Reinluftraums, insbesondere an der Außenseite des Innenraums, insbesondere an einer Öffnung des Innenraums, insbesondere an dem Luftfilterbauteil entlang strömt, insbesondere in dem Eintrittsraum entlang strömt. Bei diesem Entlangströmen kann aus einer sich in Längsrichtung erstreckenden Öffnung des Eintrittsraums, in, an oder auf der das Luftfilterbauteil angeordnet ist, sukzessive Kühlluft in den Innenraum des Gehäuses eintreten, so dass das Volumen der Kühlluft, die noch nicht in den Innenraum eingetreten ist, während des Entlangströmens in Längsrichtung abnimmt. Daher nimmt der Volumenstrom der Kühlluft in Längsrichtung ab. Dadurch ergibt sich das Problem, dass der Strömungsfluss, insbesondere der Volumenstrom ungleichmäßig ist. Ohne weitere Maßnahme nimmt der Strömungsfluss, insbesondere der Volumenstrom entlang des Strömungspfads mit größerer Entfernung von der Eintrittsöffnung, insbesondere vor Eintritt in den Reinluftraum, insbesondere vor Eintritt in den Innenraum des Gehäuses ab. Um dennoch eine gute, gleichmäßige Kühlwirkung zu erreichen, ist erfindungsgemäß vorgesehen, dass die Strömungsquerschnitte des Eintrittsraums in Längsrichtung kleiner werden. Dadurch kann ein gleichmäßiger Strömungsfluss, insbesondere ein gleichmäßiger Volumenstrom erreicht werden. Dadurch wird eine gute, gleichmäßige Kühlwirkung erzielt. Dadurch wird die gesamte Filterfläche des Luftfilterbauteils gleichmäßig zugesetzt. Dies erhöht die Standzeit des Luftfilterbauteils.

Vorteilhaft ist vorgesehen, dass die Strömungsquerschnitte in Richtung des Strömungspfads kontinuierlich kleiner werden.

In vorteilhafter Weiterbildung der Erfindung erstreckt sich der Eintrittsraum ausgehend von der Eintrittsöffnung in Längsrichtung. Dadurch tritt der Effekt des gleichmäßigen Strömungsflusses bereits nach Eintritt der Kühlluft durch die Eintrittsöffnung ein.

Zweckmäßig ist der Eintrittsraum zumindest an einer Seite von einer Außenwand des Arbeitsgeräts begrenzt. Insbesondere begrenzt die Innenseite der Außenwand den Eintrittsraum. Vorteilhaft sind die Strömungsquerschnitte von der Außenwand des Arbeitsgeräts begrenzt.

In vorteilhafter Weiterbildung ist das Arbeitsgerät so ausgelegt, dass die Kühlluft im Eintrittsraum entlang einer Filterfläche des Luftfilterbauteils strömt. Insbesondere ist das Arbeitsgerät so ausgelegt, dass die Kühlluft während des Entlangströmens entlang der Filterfläche nach und nach durch das Luftfilterbauteil in einen Reinluftraum des Arbeitsgeräts eintritt.

Zweckmäßig besitzt das Arbeitsgerät einen Boden. Der Boden ist in der Abstellposition der Horizontalebene zugewandt. Insbesondere weist das Arbeitsgerät eine dem Boden gegenüberliegende Gehäusedecke aufweist. Insbesondere weist das Arbeitsgerät eine Seitenfläche auf. Die Seitenfläche verbindet die Gehäusedecke und den Boden miteinander. Die Seitenfläche begrenzt das Arbeitsgerät entlang der Längsrichtung in Richtung senkrecht zur Werkzeugebene. Vorteilhaft ist der Eintrittsraum, insbesondere die Eintrittsöffnung an der Seitenfläche des Arbeitsgeräts angeordnet. Dadurch ist der Eintrittsraum, insbesondere die Eintrittsöffnung auf einfache Weise zugänglich. Dadurch kann die Eintrittsöffnung, insbesondere die Fläche des Luftfilters groß gestaltet sein. Die Seitenfläche des Arbeitsgeräts bietet hierfür ausreichend Platz. Der Eintrittsraum ist zweckmäßig durch die Seitenfläche, insbesondere durch eine Innenseite der Seitenfläche begrenzt.

Zweckmäßig umfasst das Arbeitsgerät einen Bügelgriff. Der Bügelgriff weist einen Bügelabschnitt auf, der in Richtung senkrecht zur Werkzeugebene über dem Eintrittsraum liegt. Insbesondere erstreckt sich der Bügelabschnitt in Richtung quer zu der Richtung, die senkrecht zur Werkzeugebene verläuft. Insbesondere erstreckt sich die Längsrichtung des Bügelabschnitts in Richtung parallel zur Werkzeugebene. Insbesondere liegt der Bügelabschnitt auf einer ersten Seite der Werkzeugebene, auf der auch der Eintrittsraum liegt.

Vorteilhaft nimmt ein Außenseitenabstand einer Außenseite der Seitenfläche zu der Werkzeugebene im Bereich des Eintrittsraums in Längsrichtung ab. Der Außenseitenabstand ist senkrecht zur Werkzeugebene gemessen. Der Außenseitenabstand ist die Entfernung der Außenseite der Seitenfläche zu der Werkzeugebene im Bereich der Filterlängserstreckung des Luftfilterbauteils. Insbesondere verändert sich der Außenseitenabstand entlang der Längsrichtung. Der Außenseitenabstand ist demnach kein Abstand im geometrischen Sinn, sondern eine lokal veränderliche Größe. Insbesondere nimmt der Außenseitenabstand ausgehend von der Eintrittsöffnung, durch die Kühlluft von außen in Längsrichtung in den Eintrittsraum strömen kann, in Längsrichtung bis zu dem Bügelabschnitt ab. Insbesondere nimmt der Außenseitenabstand in Längsrichtung, insbesondere von der Eintrittsöffnung bis zu dem Bügelabschnitt, im Wesentlichen kontinuierlich ab. Durch die Abnahme des Außenseitenabstands in Längsrichtung kann die Verkleinerung der Strömungsquerschnitte des Eintrittsraums auf einfache Weise realisiert werden.

Zweckmäßig ist der Außenseitenabstand bezüglich der Längsrichtung im Bereich des Bügelabschnitts des Bügelgriffs minimal. Dadurch kann bezüglich der Längsrichtung im Bereich des Bügelabschnitts ausreichend Platz zum Umgreifen des Bügelgriffs durch einen Benutzer geschaffen sein. Gleichzeitig kann der Bügelgriff bauraumsparend angeordnet sein. Der kleine Außenseitenabstand im Bereich des Bügelabschnitts ermöglicht eine Anordnung des Bügelgriffs, insbesondere des Bügelabschnitts so, dass das Arbeitsgerät kompakt und ergonomisch gestaltet ist. Hierdurch können die Schwenkkräfte für den Benutzer auf ein kleineres Maß reduziert werden, so dass die Ergonomie des Arbeitsgerätes, insbesondere einer Motorsäge verbessert ist.

Die Außenseite der Seitenfläche besitzt einen Abstandsbereich. Der Abstandsbereich liegt in Richtung senkrecht zur Werkzeugebene unterhalb des Bügelabschnitts. Insbesondere weist der Bügelgriff im Bügelabschnitt einen senkrecht zur Werkzeugebene gemessenen Bügelüberstand über den Abstandsbereich auf. Der Bügelabschnitt des Bügelgriffs steht um den Bügelüberstand über die Außenseite der Seitenfläche in dem Bereich der Seitenfläche hervor, die senkrecht zur Werkzeugebene unterhalb des Bügelabschnitts liegt. Dieser Bereich der Seitenfläche ist der Abstandsbereich. Der Bügelüberstand wird auch als Bügelabstand bezeichnet. Insbesondere ist der Bügelüberstand ein geometrischer Abstand, gibt also die Länge der kürzesten, in Richtung senkrecht zur Werkzeugebene verlaufenden "Abstandslinie" an. Der Bügelabstand ist senkrecht zur Werkzeugebene gemessen. Der Bügelabstand entspricht dem senkrecht zur Werkzeugebene gemessenen Abstand des Bügelabschnitts des Bügelgriffs zur Außenseite der Seitenfläche des Arbeitsgeräts, insbesondere zu dem Bereich der Außenseite der Seitenfläche, der senkrecht zur Werkzeugebene unterhalb des Bügelabschnitts liegt, insbesondere zu dem Abstandsbereich.

Der Bügelgriff weist im Bügelabschnitt einen senkrecht zur Werkzeugebene gemessenen Schwerpunktabstand zu dem Masseschwerpunkt des Arbeitsgeräts auf. Auch der Schwerpunktabstand ist ein Abstand im geometrischen Sinn. Vorteilhaft beträgt der Bügelüberstand von 20% bis 60%, insbesondere von 30% bis 50%, bevorzugt von 35% bis 45% des Schwerpunktabstands. Dadurch kann der Bügelgriff, insbesondere der Bügelabschnitt des Bügelgriffs nahe am Masseschwerpunkt des Arbeitsgeräts angeordnet sein. Dadurch, dass der Außenseitenabstand bezüglich der Längsrichtung im Bereich des Bügelabschnitts klein, insbesondere minimal ist, ist auch bei einem kleinen Verhältnis von Bügelüberstand zu Schwerpunkabstand ein Umgreifen des Bügelgriffs im Bügelabschnitt möglich. Dies ermöglicht gleichzeitig eine kompakte Gestaltung des Arbeitsgeräts und ein ergonomisches Führen und Tragen des handgeführten Arbeitsgeräts mittels des Bügelgriffs. Da der Bügelgriff nahe am Massenschwerpunkt liegt, sind die Hebelkräfte zum Führen und Tragen des Arbeitsgeräts mittels des Bügelgriffs klein. Insbesondere beträgt der Schwerpunktabstand von 9 cm bis 15 cm, zweckmäßig von 11 cm bis 13 cm. Es kann auch vorgesehen sein, dass der Schwerpunktabstand von 8 cm bis 12 cm, insbesondere von 9 cm bis 11 cm beträgt.

In vorteilhafter Weiterbildung der Erfindung weist das Arbeitsgerät einen Filterdeckel auf. Es kann aber auch eine Gestaltung des Arbeitsgeräts ohne Filterdeckel vorgesehen sein. Zweckmäßig ist der Eintrittsraum durch den Filterdeckel begrenzt. Insbesondere ist die Eintrittsöffnung für Kühlluft in dem Filterdeckel ausgebildet. Dadurch ist eine einfache Herstellung der Eintrittsöffnung möglich. Insbesondere kann der Filterdeckel in dem Teil, in dem er keine Eintrittsöffnung aufweist, eine Öffnung des Arbeitsgeräts abdecken, in, auf oder an der das Luftfilterbauteil angeordnet ist. Vorteilhaft bildet der Filterdeckel einen Teil der Außenwand. Zweckmäßig bildet der Filterdeckel einen Teil der Seitenfläche.

Vorteilhaft ist der Filterdeckel in Ansicht senkrecht auf die Horizontalebene in der Abstellposition im Wesentlichen keilförmig. Dies ermöglicht eine einfache Realisierung der Abnahme der Strömungsquerschnitte in Längsrichtung.

Zweckmäßig dient der Filterdeckel zur Halterung des Luftfilterbauteils auf. Insbesondere deckt der Filterdeckel das Luftfilterbauteil zumindest teilweise, vorteilhaft in Seitenansicht in Richtung senkrecht auf die erste Seite der Werkzeugebene vollständig ab. Zweckmäßig ist das Luftfilterbauteil zwischen dem Filterdeckel und dem Grundkörper des Arbeitsgeräts gehalten.

Insbesondere ist das Luftfilterbauteil mit Spiel zwischen dem Filterdeckel und dem Grundkörper des Arbeitsgeräts gehalten. Dadurch ist eine einfache Herstellung des Arbeitsgeräts möglich. Der Filterdeckel kann gegen den Grundkörper gepresst werden und am Grundkörper anliegen ohne dass hierfür das Luftfilterbauteil bei den Herstellungstoleranzen berücksichtigt werden muss. Dadurch, dass der Filterdeckel gegen den Grundkörper gepresst werden kann, können geringen Anforderung an die Fertigungstoleranzen bezüglich der Relativlage von Grundkörper und Filterdeckel gestellt werden und dennoch der Filterdecke verlässlich dicht am Grundkörper anliegen.

Zweckmäßig ist der Filterdeckel und/oder das Luftfilterbauteil durch ein einziges Befestigungselement an dem Grundkörper befestigbar. Dadurch kann der Filterdeckel und/oder das Luftfilterbauteil dicht, insbesondere luftdicht, an dem Grundkörper anliegen. Insbesondere handelt es sich bei dem einzigen Befestigungselement um ein zentrales Befestigungselement. Vorteilhaft ist das Befestigungselement in der Seitenansicht senkrecht auf die Werkzeugebene, insbesondere auf die erste Seite der Werkzeugebene in etwa in der Mitte des Filterdeckels, insbesondere im Flächenschwerpunkt der der Filteraußenkontur zugeordneten ebenen Fläche befestigbar. Dadurch, dass der Filterdeckel und/oder das Luftfilterbauteil durch ein einziges Befestigungselement befestigbar ist, kann der Filterdeckel und/oder das Luftfilterbauteil auf einfache und komfortable Weise montiert und demontiert werden. Das Luftfilterbauteil ist schnell demontierbar und auf einfache Weise, beispielsweise für Reinigungszwecke, zugänglich.

Zweckmäßig verbindet das Befestigungselement den Grundkörper des Arbeitsgeräts und den Filterdeckel miteinander. Insbesondere ist im Bereich des Befestigungselements ein erster Anschlagbereich für das Luftfilterbauteil am Grundkörper angeordnet. Vorteilhaft ist ein zweiter Anschlagbereich für das Luftfilterbauteil am Filterdeckel angeordnet. Insbesondere ist das Luftfilterbauteil mit Spiel in Richtung vom ersten Anschlagbereich zum zweiten Anschlagbereich zwischen dem ersten Anschlagbereich und dem zweiten Anschlagbereich gehalten. Dadurch kann der Filterdeckel auch bei geringen Anforderungen an die Fertigungstoleranzen verlässlich gehalten sein und gleichzeitig kann der Filterdeckel dicht gegen den Grundkörper gepresst werden.

In vorteilhafter Weiterbildung der Erfindung weist das Arbeitsgerät einen Aufnahmeschacht für einen Akkupack auf. Der Akkupack ist in einer Einschubrichtung durch eine Aufnahmeöffnung des Aufnahmeschachts in den Aufnahmeschacht einschiebbar. Insbesondere verläuft die Einschubrichtung parallel zur Werkzeugebene. Insbesondere ist der Aufnahmeschacht bezüglich der Längsrichtung im Bereich des Eintrittsraums angeordnet. Aufgrund der keilförmigen Gestaltung des Eintrittsraums, insbesondere des Filterdeckels, ist im bezüglich der Längsrichtung hinteren Bereich, insbesondere in der hinteren Hälfte des Eintrittsraums ausreichend Platz für den Aufnahmeschacht. Gleichzeitig ist im Bereich der bezüglich der Längserstreckung vorderen Hälfte des Eintrittsraums außerhalb des Grundkörpers des Arbeitsgeräts ausreichend Platz für die Anordnung eines Griffraums, in den der Benutzer mit den Fingern seiner Hand greifen kann. Der Bügelabschnitt kann nah am Grundkörper angeordnet sein wodurch das Arbeitsgerät auch bei einem großen Akkuschacht kompakt und ergonomisch gestaltet werden kann.

Der Aufnahmeschacht besitzt eine in Längsrichtung gemessene Tiefe und eine senkrecht zur Werkzeugebene gemessene Breite. Insbesondere ist die Breite größer als die Tiefe. Insbesondere beträgt die Breite mindestens 50%, insbesondere mindestens 60%, einer in Richtung senkrecht zur Werkzeugebene gemessenen maximalen Breite des Grundkörpers des Arbeitsgeräts. Insbesondere weist der Grundkörper des Arbeitsgeräts die maximale Breite in der bezügliche der Längsrichtung hinteren Hälfte des Eintrittsraums auf. Dadurch kann ein großer Akkupack in dem Akkuschacht untergebracht werden.

Zweckmäßig ist vorgesehen, dass sich eine gedachte Projektion des Eintrittsraums in Richtung senkrecht zur Werkzeugebene auf die Werkzeugebene und eine gedachte Projektion des Aufnahmeschachts in Richtung senkrecht zur Werkzeugebene auf die Werkzeugebene in der Werkzeugebene überlappen.

Zweckmäßig ist die Seitenfläche frei von der Aufnahmeöffnung eines Aufnahmeschacht für einen Akku. Dadurch kann das Luftfilterbauteil, insbesondere die Filterfläche des Luftfilterbauteils besonders groß gestaltet sein. Für eine Aufnahmeöffnung eines Aufnahmeschachts muss an der Seitenfläche kein Platz vorgesehen sein.

Insbesondere begrenzt der Filterdeckel den Eintrittsraum. Durch die oben beschriebene Keilform des Filterdeckels kann die Reduzierung der Strömungsquerschnitte des Eintrittsraum in Längsrichtung auf einfache Weise umgesetzt sein. Insbesondere ist der Eintrittsraum durch den Filterdeckel und das Luftfilterbauteil ausgebildet. Insbesondere weist der Eintrittsraum an seinem einen Ende die Eintrittsöffnung für Kühlluft auf. Zweckmäßig ist das andere Ende des Eintrittsraums für den Austritt von Kühlluft in den Reinluftraum des Arbeitsgeräts, insbesondere in den Innenraum des Arbeitsgeräts vollständig durch das Luftfilterbauteil gebildet, insbesondere durch das Luftfilterbauteil vollständig bedeckt.

Das Arbeitsgerät besitzt eine Aufwärtsrichtung. Die Aufwärtsrichtung erstreckt sich in Richtung quer, insbesondere senkrecht zur Längsrichtung. Die Aufwärtsrichtung erstreckt sich insbesondere in Richtung parallel zur Werkzeugebene. Wenn das Arbeitsgerät auf der Horizontalebene in der dafür vorgesehenen Abstellposition abgestellt ist, erstreckt sich die Aufwärtsrichtung zweckmäßig senkrecht zur Horizontalebene. Die Aufwärtsrichtung verläuft insbesondere in Richtung vom Boden des Arbeitsgeräts hin zur Gehäusedecke des Arbeitsgeräts.

Es kann vorgesehen sein, dass das Luftfilterbauteil in einem Winkel von mindestens 5°, insbesondere von höchstens 40°, gegen die Aufwärtsrichtung, insbesondere gegen die Werkzeugebene, geneigt ist. Zweckmäßig erstreckt sich das Luftfilterbauteil im Wesentlichen in einer Ebene. Insbesondere nimmt der Abstand des Luftfilterbauteils zur Werkzeugebene in Aufwärtsrichtung zu. Bei diesem Abstand handelt es sich um einen lokalen Abstand einzelner Punkte des Luftfilterbauteils zur Werkzeugebene. Eine derart geneigte Anordnung des Luftfilterbauteils verbessert dessen Selbstreinigung.

Ausführungsbeispiele der Erfindung sind im Folgenden anhand der Zeichnung erläutert. Es zeigen:
- Fig. 1: eine perspektivische Darstellung eines handgeführten Arbeitsgeräts ohne Werkzeug, wobei der Filterdeckel nach Art einer Explosionsdarstellung vom Grundkörper des Arbeitsgeräts entfernt dargestellt ist,
- Fig. 2: eine schematische Seitenansicht auf das Arbeitsgerät aus Fig. 1 mit Werkzeug, und Blickrichtung senkrecht auf die erste Seite der Werkzeugebene des Werkzeugs, auf der auch das Luftfilterbauteil angeordnet ist,
- Fig. 2a: eine schematische Seitenansicht auf eine alternative Ausführung des Arbeitsgeräts aus Fig. 1, bei der das Luftfilterbauteil offen an der ersten Seitenfläche liegt ohne durch einen Filterdeckel abgedeckt zu sein, wobei das Arbeitsgerät mit Werkzeug und in Blickrichtung senkrecht auf die erste Seite der Werkzeugebene des Werkzeugs dargestellt ist, auf der auch das Luftfilterbauteil angeordnet ist,
- Fig. 3: eine Seitenansicht auf das hintere Ende des Arbeitsgeräts aus Fig. 1 in Richtung seiner Längsrichtung,
- Fig. 4: eine schematische Draufsicht von oben auf das Arbeitsgerät aus Fig. 1 oder eine schematische Draufsicht von oben auf das Arbeitsgerät aus Fig. 2a oder eine schematische Draufsicht von oben auf das Arbeitsgerät aus Fig. 9,
- Fig. 5: eine Seitenansicht auf die Außenseite des Filterdeckels des Arbeitsgeräts aus Fig. 1,
- Fig. 6: eine Seitenansicht auf die Innenseite des Filterdeckels des Arbeitsgeräts aus Fig. 1,
- Fig. 7: eine Seitenansicht auf die hintere Seite des Filterdeckels aus Fig. 5, die im montierten Zustand des Filterdeckels dem hinteren Ende des Arbeitsgeräts zugewandt ist,
- Fig. 8: eine Draufsicht von unten auf den Filterdeckel aus Fig. 5, auf die untere Seite, die im montierten Zustand des Filterdeckels, wenn das Arbeitsgerät auf seiner Abstellfläche auf einer Horizontalfläche abgestellt ist, nach unten zeigt,
- Fig. 9: eine schematische Seitenansicht auf eine alternative Ausführung des Arbeitsgeräts aus Fig. 1 mit demontiertem Filterdeckel und demontiertem Luftfilterbauteil in Blickrichtung senkrecht auf die erste Seite der Werkzeugebene des nicht dargestellten Werkzeugs, auf der auch das Luftfilterbauteil anzuordnen ist,
- Fig. 10: eine perspektivische Ansicht von unten auf das Arbeitsgerät aus Fig. 9 mit demontiertem Filterdeckel, in der die Öffnung in einen Innenraum eines Grundgehäuses sichtbar ist,
- Fig. 11: eine Schnittdarstellung eines Horizontalschnitts durch das Arbeitsgerät aus Fig. 9 mit montiertem Luftfilterbauteil und montiertem Filterdeckel entlang der in Fig. 13 eingezeichneten Schnittebene XI-XI,
- Fig. 12: eine Schnittdarstellung eines Horizontalschnitts durch das Arbeitsgerät aus Fig. 9 mit montiertem Luftfilterbauteil und montiertem Filterdeckel entlang der in Fig. 13 eingezeichneten Schnittebene XII-XII,
- Fig. 13: eine Schnittdarstellung eines Vertikalschnitts durch das Arbeitsgerät aus Fig. 9 mit montiertem Luftfilterbauteil und montiertem Filterdeckel entlang der in Fig. 11 eingezeichneten Schnittebene XIII-XIII,
- Fig. 13a: ein vergrößertes Detail aus Fig. 13 und
- Fig. 14: eine Schnittdarstellung eines Vertikalschnitts durch das Arbeitsgerät aus Fig. 9 mit montiertem Luftfilterbauteil und montiertem Filterdeckel entlang der in Fig. 11 eingezeichneten Schnittebene XIV-XIV.

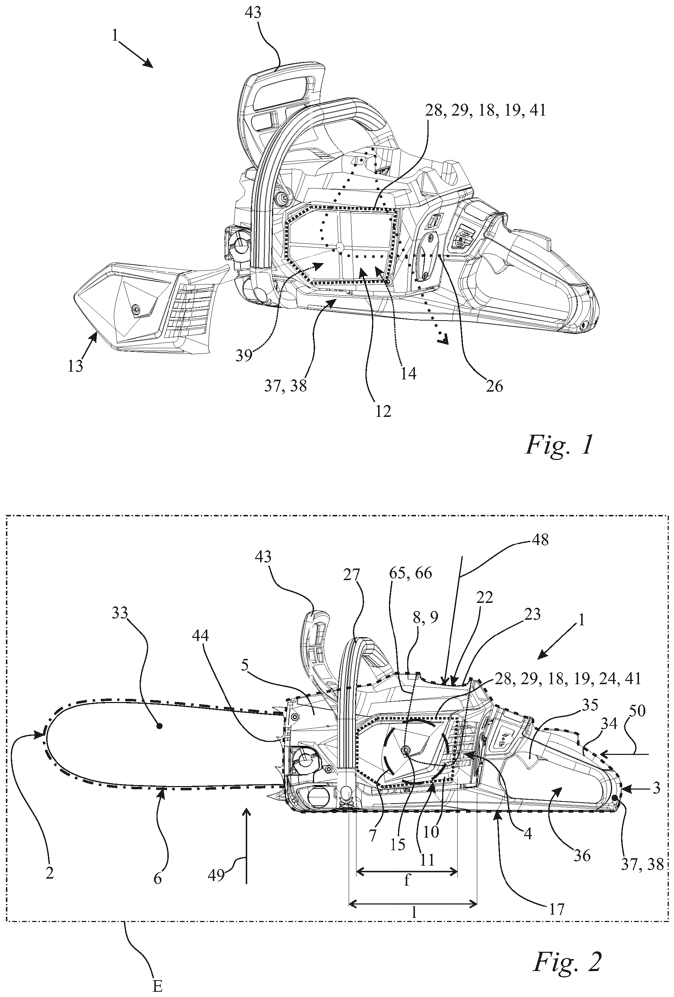

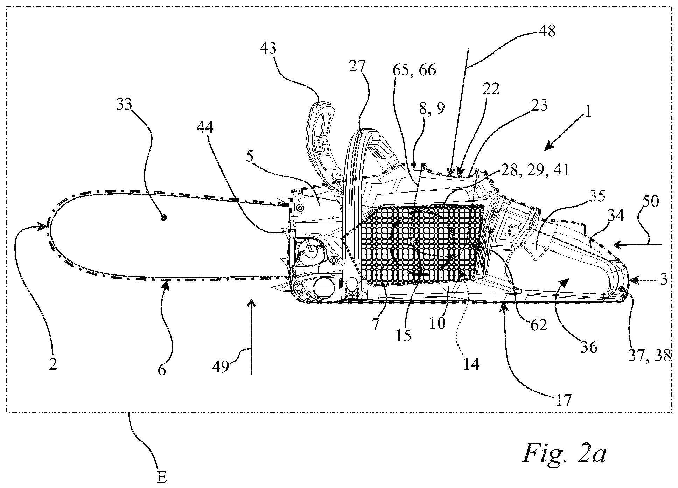

Fig. 1 zeigt ein handgeführtes Arbeitsgerät 1. Das handgeführte Arbeitsgerät 1 umfasst ein in Fig. 2 dargestelltes Werkzeug 6 (in Fig. 1 nicht dargestellt). Bei dem handgeführten Arbeitsgerät kann es sich um eine Motorkettensäge, einen Trennschleifer oder ein ähnliches handgeführtes Arbeitsgerät handeln. Das Arbeitsgerät 1 ist im bestimmungsgemäßen Einsatz tragbar. Das Arbeitsgerät 1 ist im bestimmungsgemäßen Einsatz handgeführt. In den Ausführungsbeispielen ist das Arbeitsgerät 1 eine Motorkettensäge. In den Ausführungsbeispielen ist die Motorkettensäge eine sogenannte Rear-Handle-Kettensäge oder Baumfällsäge. Es kann sich aber auch um eine Baumpflegesäge mit einem obenliegenden Bediengriff handeln.

Wie in Fig. 2 schematisch dargestellt, umfasst das handgeführte Arbeitsgerät 1 einen Motor 7 zum Antrieb des Werkzeugs 6. In den Ausführungsbeispielen ist der Motor 7 ein Elektromotor. Das Werkzeug 6 ist eine Sägekette. Es kann aber auch, insbesondere für den Fall, dass das Arbeitsgerät ein Trennschleifer ist, vorgesehen sein, dass das Werkzeug 6 ein Sägeblatt oder eine Trennscheibe ist. In den Ausführungsbeispielen läuft das Werkzeug 6 im Betrieb um eine Führungsschiene 33 um.

Das Arbeitsgerät 1 umfasst in allen Ausführungsbeispielen einen Bediengriff 34. Am Bediengriff 34 ist ein Bedienelement 35 angeordnet. Mittels des Bedienelements 35 kann der Bediener die Leistung des Motors 7 bzw. die Drehzahl des Motors 7 oder des Werkzeugs 6 vorgeben. Der Bediengriff 34 begrenzt eine Grifföffnung 36. Durch die Grifföffnung 36 kann der Benutzer mit den Fingern seiner Hand durchgreifen und so den Bediengriff 34 umschließen. Die Grifföffnung 36 durchdringt das Arbeitsgerät 1, insbesondere einen Grundkörper 37 des Arbeitsgeräts 1 vollständig. Zusätzlich zum Bediengriff 34 umfasst das Arbeitsgerät 1 in allen Ausführungsbeispielen einen Bügelgriff 27. Der Bügelgriff 27 dient zum Tragen und Führen des Arbeitsgeräts 1. Der Bügelgriff 27 ist von einem Griffrohr gebildet. Der Benutzer kann das Griffrohr vollständig umgreifen.

Der Bügelgriff 27 ist zwischen dem Bediengriff 34 und dem Werkzeug 6 angeordnet. Eine Längsrichtung 50 erstreckt sich in Richtung von dem Bediengriff 34 hin zu dem Werkzeug 50. Dies gilt auch für den Fall einer Baumpflegesäge. Die Längsrichtung 50 verläuft parallel zu einer Horizontalebne, wenn das Arbeitsgerät 1 in auf der Horizontalebene abgestellt ist. Die Längsrichtung 50 entspricht im Ausführungsbeispiel der Längsrichtung der Führungsschiene 33. Der Bügelgriff 27 ist bezüglich der Längsrichtung 50 zwischen dem Bediengriff 34 und dem Werkzeug 6 angeordnet. Der Bediengriff 34 liegt bezüglich der Längsrichtung 50 hinter dem Werkzeug 6. Das Werkzeug 6 liegt bezüglich der Längsrichtung 50 vor dem Bediengriff 34.

Wenn entlang der Längsrichtung 50 zunächst ein Ausgangspunkt, dann ein erster Punkt und dann ein zweiter Punkt angeordnet ist, also der zweite Punkt ausgehend von dem Ausgangspunkt in Längsrichtung 50 einen größeren in Längsrichtung 50 gemessenen Abstand zu dem Ausgangspunkt aufweist als der erste Punkt, dann liegt der zweite Punkt bezüglich der Längsrichtung 50 vor dem ersten Punkt. Der erste Punkt liegt bezüglich der Längsrichtung 50 hinter dem zweiten Punkt.

Das Arbeitsgerät 1 besitzt ein vorderes Ende 2 und ein hinteres Ende 3. Das vordere Ende 2 ist im Betrieb des Arbeitsgeräts 1 vom Benutzer abgewandt. Das hintere Ende 3 ist im Betrieb des Arbeitsgeräts 1 dem Benutzer zugewandt. Am vorderen Ende 2 ist das Werkzeug 6 angeordnet. Im Ausführungsbeispiel befindet sich das vordere Ende 2 am vorderen Ende der Führungsschiene 33. Das um die Führungsschiene 33 umlaufende Werkzeug 6 passiert während des Umlaufens das vordere Ende 2 des Arbeitsgeräts 1. Das hintere Ende 3 ist am hinteren Ende des Bediengriffs 34 angeordnet. Der Bediengriff 34 bildet das hintere Ende 3 des Arbeitsgeräts 1. In Richtung vom hinteren Ende 3 zu dem vorderen Ende 2 verläuft eine Längsrichtung 50. Die Längsrichtung 50 zeigt im Einsatz des Arbeitsgeräts 1 vom Bediener weg. Die Längsrichtung 50 entspricht im Ausführungsbeispiel der Längsrichtung der Führungsschiene 33. Der Bügelgriff 27 ist bezüglich der Längsrichtung 50 zwischen dem vorderen Ende 2 und dem hinteren Ende 3 angeordnet.

Das Arbeitsgerät 1 kann auf einer Horizontalebene abgestellt werden, insbesondere in einer Abstellposition. Das Arbeitsgerät 1 umfasst einen Boden 17. In den Ausführungsbeispielen kann das Arbeitsgerät 1 auf seinem Boden 17 abgestellt werden. Der Boden 17 bildet eine Abstellfläche. Es kann aber auch vorgesehen sein, dass das Arbeitsgerät auf Füßen abstellbar ist und dass zwischen dem Boden 17 und der Horizontalebene ein Abstand besteht. In jedem Fall ist der Boden 17 in der Abstellposition der Horizontalebene zugewandt. Die Abstellposition wird auch als Abstellzustand bezeichnet. Beim Abstellen des Arbeitsgeräts 1 auf der Horizontalebene verläuft die Längsrichtung 50 parallel zu der Horizontalebene. In den Ausführungsbeispielen verläuft die Längsrichtung 50 parallel zu der vom Boden 17 ausgebildeten Abstellfläche.

Wie in Fig. 2 dargestellt, umfasst das Arbeitsgerät 1 eine Eintrittsöffnung 4. Die Eintrittsöffnung 4 dient zum Eintritt von Kühlluft in das Arbeitsgerät 1. Die Kühlluft ist zur Kühlung des als Elektromotor ausgebildeten Motors 7, insbesondere zur Kühlung der elektronischen Komponenten des Elektromotors vorgesehen. Das Arbeitsgerät 1 umfasst ein Luftfilterbauteil 12 zur Filterung der Kühlluft. Das Luftfilterbauteil 12 ist in Fig. 1 dargestellt. Fig. 2 a zeigt eine alternative Ausführung mit einem alternativ gestalteten Luftfilterbauteil 12. In den Ausführungsbeispielen umfasst das Luftfilterbauteil 12 einen Filterrahmen und einen Luftfilter. Der Luftfilter ist insbesondere in dem Filterrahmen gehalten. Der Luftfilter ist die Einheit, die für sich genommen die Filterung der Luft bewirkt. In den Ausführungsbeispielen ist der Luftfilter des Luftfilterbauteils 12 ein Feinfilter. Der Feinfilter weist eine Maschenweite von kleiner als 100 µm auf. In Ausführungsbeispielen ist der Luftfilter des Luftfilterbauteils 12 ein Flachfilter. Es kann sich bei dem Luftfilter des Luftfilterbauteils 12 aber auch um jede andere Art von Luftfilter handeln. Das Luftfilterbauteil 12 kann auch ausschließlich aus einem Luftfilter bestehen. Es kann auch vorgesehen sein, dass das Luftfilterbauteil keinen Filterrahmen umfasst.

Das Arbeitsgerät 1 umfasst ein Gehäuse 5. Der Motor 7 ist in dem Gehäuse 5 angeordnet. Das Gehäuse 5 begrenzt das Arbeitsgerät 1 nach außen hin. Der Motor 7 ist im Ausführungsbeispiel in dem Grundkörper 37 des Arbeitsgeräts 1 angeordnet. Der Grundkörper 37 besitzt ein Grundgehäuse 38, das auch im Fig. 1 dargestellt ist. Der Motor 7 ist in dem Grundgehäuse 38 des Grundkörpers 37 angeordnet. Das Gehäuse 5 ist zumindest teilweise von dem Grundgehäuse 38 gebildet. Der Bügelgriff 27 übergreift das Gehäuse 5. Der Bügelgriff 27 übergreift den Grundkörper 37. Der Bügelgriff 27 übergreift das Grundgehäuse 38. Der Bügelgriff 27 ist nicht Bestandteil des Gehäuses 5. Der Bügelgriff 27 ist nicht Bestandteil des Grundgehäuses 38.

Wie in Fig. 2 dargestellt, besitzt das Werkzeug 6 eine Werkzeugebene E. Die Werkzeugebene E verläuft parallel zur Längsrichtung 50. Die Längsrichtung 50 verläuft parallel zur Werkzeugebene E. In den Ausführungsbeispielen verläuft die Werkzeugebene E senkrecht zum Boden 17 des Arbeitsgeräts 1. Die Grifföffnung 36 durchdringt das Arbeitsgerät 1, insbesondere das Grundgehäuse 38 des Arbeitsgeräts 1 in Richtung senkrecht zur Werkzeugebene E vollständig. In der Abstellposition verläuft die Werkzeugebene E senkrecht zur Horizontalebene. Beim Abstellen des Arbeitsgeräts 1 auf einer Horizontalebene, verläuft die Werkzeugebene E senkrecht zur Horizontalebene. Das Werkzeug 6 läuft in der Werkzeugebene E um. Im Ausführungsbeispiel läuft die Sägekette in der Werkzeugebene E um die Führungsschiene 33 um. Es kann aber auch, insbesondere wenn das Arbeitsgerät ein Trennschleifer ist, vorgesehen sein, dass das Werkzeug 6 ein Kreissägeblatt oder eine Trennscheibe ist. In diesem Fall rotiert das Kreissägeblatt in der Werkzeugebene. Die Rotationsachse des Werkzeugs 6 verläuft senkrecht zur Werkzeugebene E.

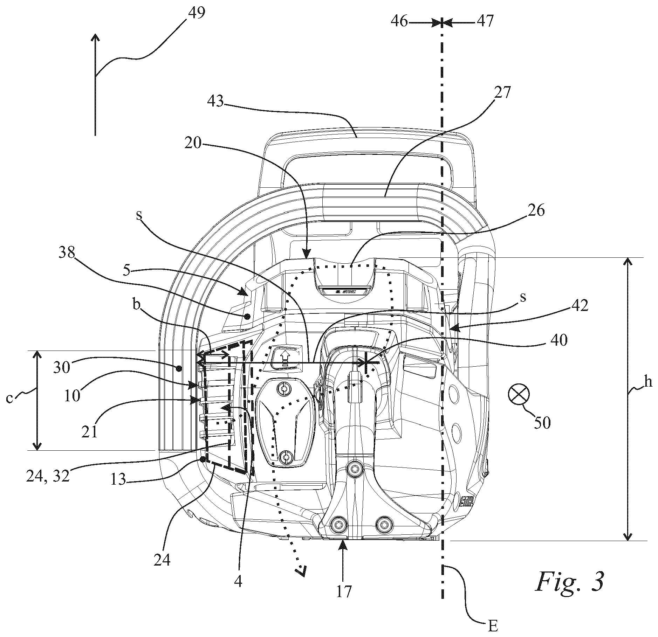

Wie aus den Figuren 2, 3 und 4 ersichtlich, ist die Eintrittsöffnung 4 in diesem Ausführungsbeispiel so angeordnet, dass Kühlluft in Längsrichtung 50 durch die Eintrittsöffnung 4 strömen kann. Die Kühlluft kann also in Richtung vom hinteren Ende 3 des Arbeitsgeräts 1 hin zum vorderen Ende 2 des handgeführten Arbeitsgeräts 1 durch die Eintrittsöffnung 4 in das Arbeitsgerät 1 eintreten. Dass die Kühlluft in Längsrichtung 50 durch die Eintrittsöffnung 4 strömen kann, ist insbesondere in Fig. 3 ersichtlich. In dieser Seitenansicht auf das hintere Ende 3 ist die Eintrittsöffnung 4 für die Kühlluft von außen in das Innere des handgeführten Arbeitsgeräts 1 sichtbar. Mehr als die Hälfte, insbesondere mehr als zwei Drittel, der Kühlluft tritt in Längsrichtung 50 durch die Eintrittsöffnung 4 in das Arbeitsgerät 1 ein.

Im Ausführungsbeispiel nach Fig. 2a ist dagegen vorgesehen, dass die Kühlluft im Wesentlichen in Richtung quer, insbesondere in Richtung senkrecht zur Längsrichtung 50 in das Arbeitsgerät 1 eintritt. Im Ausführungsbeispiel nach Fig. 2a tritt die Kühlluft in Richtung quer, insbesondere in Richtung senkrecht zur Werkzeugebene E in das Arbeitsgerät 1 ein. Im Ausführungsbeispiel nach Fig. 2a ist eine seitliche Eintrittsöffnung 62 für den Eintritt von Kühlluft in das Arbeitsgerät 1 vorgesehen. Im Ausführungsbeispiel nach Fig. 2a bildet der das Luftfilterbauteil 12 einen Teil des äußeren Gehäuses 5 des Arbeitsgeräts 1.

In allen Ausführungsbeispielen besitzt die Werkzeugebene E eine in Fig. 3 dargestellte erste Seite 46. Die Werkzeugebene E besitzt eine zweite Seite 47. Die Werkzeugebene E trennt die erste Seite 46 von der zweiten Seite 47. Das Luftfilterbauteil 12 ist vollständig auf der ersten Seite 46 der Werkzeugebene E angeordnet. Die Eintrittsöffnung 4, bzw. die Eintrittsöffnung 62 ist vollständig auf der ersten Seite angeordnet.

Wie in Fig. 2 und für die alternative Ausführung des Arbeitsgeräts 1 aus Fig. 2 in Fig. 2a dargestellt, besitzt das Gehäuse 5 des handgeführten Arbeitsgeräts 1 in einer Seitenansicht senkrecht auf die Werkzeugebene E, insbesondere auf die erste Seite 46 der Werkzeugebene E eine Gehäuseaußenkontur 8. Die Gehäuseaußenkontur 8 begrenzt bei Projektion der Gehäuseaußenkontur 8 in Richtung senkrecht zur Werkzeugebene E auf die Werkzeugebene E in der Werkzeugebene E eine gedachte Gehäusefläche 9. Die Gehäuseaußenkontur 8 schließt sämtliche innerhalb der Gehäuseaußenkontur 8 liegenden Öffnungen des Arbeitsgeräts 1 ein. Insbesondere umschließt die Gehäuseaußenkontur 8 die Grifföffnung 36. Die Gehäusefläche 9 besitzt keinerlei von der Gehäusefläche 9 eingeschlossenen Bereiche, die nicht zur Gehäusefläche 9 zählen. Die Gehäusefläche 9 besitzt keine innen liegende Kontur. Die Gehäusefläche 9 wird durch eine einzige, geschlossen um die Gehäusefläche 9 umlaufende Begrenzungslinie, nämlich die Gehäuseaußenkontur 8, begrenzt.

Das Arbeitsgerät 1 umfasst in allen Ausführungsbeispielen einen Bremshebel 43. Der Bremshebel 43 ist schwenkbar am Grundkörper 37 gelagert. Der Bremshebel 43 ist schwenkbar am Gehäuse 5 gelagert. Der Bremshebel 43 dient zum Abbremsen des Werkzeugs 6. Der Bremshebel 43 liegt teilweise außerhalb der Gehäuseaußenkontur 8. Der Bremshebel 43 steht über die Gehäuseaußenkontur 8 hervor.

Das Arbeitsgerät 1 umfasst in allen Ausführungsbeispielen einen in Fig. 2 dargestellten Krallenanschlag 44. Der Krallenanschlag 44 ist am Gehäuse 5 festgelegt. Der Krallenanschlag 44 dient als Anschlag des Arbeitsgeräts 1 beim Eingriff des Werkzeugs 6 in ein Werkstück. Der Krallenanschlag 44 liegt zumindest teilweise außerhalb der Gehäuseaußenkontur 8. Der Krallenanschlag 44 steht über die Gehäuseaußenkontur 8 hervor.

Das Arbeitsgerät 1 ist (bis auf das Ausführungsbeispiel nach Fig. 2a) in der Seitenansicht senkrecht auf die erste Seite 46 der Werkzeugebene E innerhalb der Gehäuseaußenkontur 8 über mindestens 95%, insbesondere über mindestens 97%, vorteilhaft über mindestens 98,5% der Gehäusefläche 9 frei von Öffnungen für den Eintritt von Kühlluft in das Arbeitsgerät 1. Die Seitenansicht senkrecht auf die erste Seite 46 der Werkzeugebene E ist die Seitenansicht des Arbeitsgeräts 1, in der man in Richtung senkrecht auf die Werkzeugebene E blickt, und zwar von der ersten Seite 46 der Werkzeugebene E aus. Man befindet sich also auf der ersten Seite 46 der Werkzeugebene E und blickt Richtung Werkzeugebene E.

Eine Projektion sämtlicher, in Seitenansicht senkrecht auf die erste Seite 46 der Werkzeugebene E sichtbarer Öffnungen für den Eintritt von Kühlluft in Richtung senkrecht zur Werkzeugebene E auf die Werkzeugebene E bedeckt in der Gehäusefläche 9 einen Flächenanteil von weniger als 5%, insbesondere von weniger als 3%, vorteilhaft von weniger als 1,5% der Gehäusefläche 9. Der Bereich, der Gehäusefläche 9, der frei von Projektionen der Öffnungen für den Eintritt von Kühlluft in das Arbeitsgerät 1 ist, beträgt mindestens 95%, insbesondere mindestens 97%, im Ausführungsbeispiel mindestens 98,5% der Gehäusefläche 9.

Mit Öffnung ist der Teil einer Durchdringungsöffnung für den Eintritt von Kühlluft in das Arbeitsgerät 1 bezeichnet, der in Seitenansicht in Richtung senkrecht auf die erste Seite 46 der Werkzeugebene E sichtbar ist. Die Durchdringungsöffnung kann größer als die Öffnung sein. In Seitenansicht in Richtung senkrecht auf die erste Seite 46 der Werkzeugebene E kann die Durchdringungsöffnung von Bauteilen des Arbeitsgeräts 1 überdeckt sein.

Die Eintrittsöffnung 4 ist eine Durchdringungsöffnung für den Eintritt von Kühlluft in das Arbeitsgerät 1. Die Eintrittsöffnung 4 ist an der Außenseite des Arbeitsgeräts 1 angeordnet. Die Eintrittsöffnung 4 stellt die erste Einlasspforte für den Eintritt von Kühlluft von außen in das Arbeitsgerät 1 dar. Die Eintrittsöffnung 4 ist eine Öffnung für den Eintritt von Kühlluft in das Arbeitsgerät 1 im oben beschriebenen Sinn. Im Ausführungsbeispiel ist die projizierte Fläche der Öffnung der Eintrittsöffnung 4 und der Durchdringungsöffnung der Eintrittsöffnung 4 identisch. Es kann aber auch vorkommen, dass die projizierter Fläche der Durchdringungsöffnung größer ist als die projizierte Fläche der Öffnung.

Anstatt in der Werkzeugebene E kann die Gehäuseaußenkontur 8 die Gehäusefläche 9 auch in einer gedachten, parallel zur Werkzeugebene E verlaufenden Ebene begrenzen.

Wie in Fig. 2 dargestellt, weist das Arbeitsgerät 1 eine Außenwand 10 auf. Die Eintrittsöffnung 4 durchdringt die Außenwand 10 vollständig. Eine Durchdringungsöffnung durchdringt die Außenwand 10 vollständig. Eine Öffnung durchdringt die Außenwand 10 vollständig. Die Außenwand 10 stellt die unmittelbare Begrenzung des Arbeitsgeräts 1 gegenüber dem außenliegenden Bereich dar. Die Außenwand 10 bildet zumindest teilweise eine Wand des Gehäuses 5.

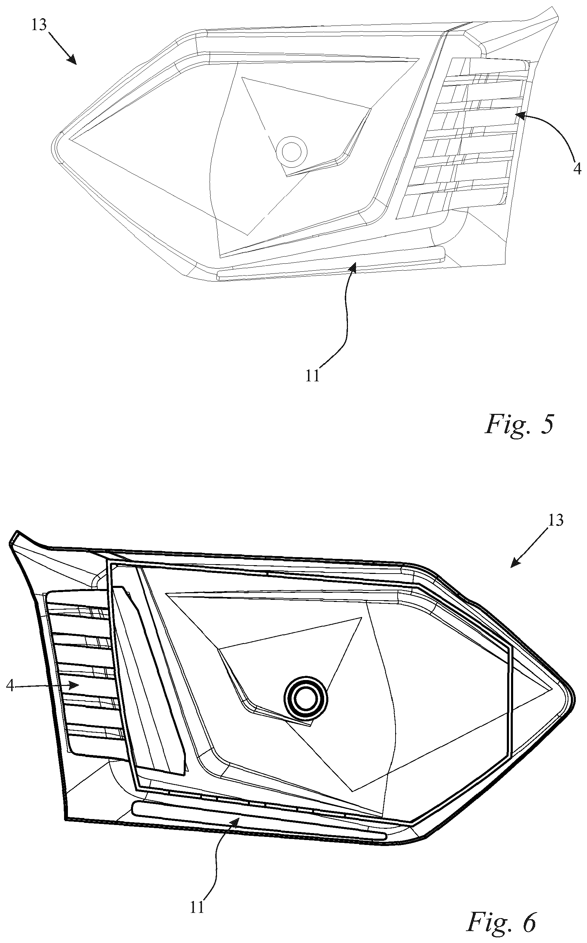

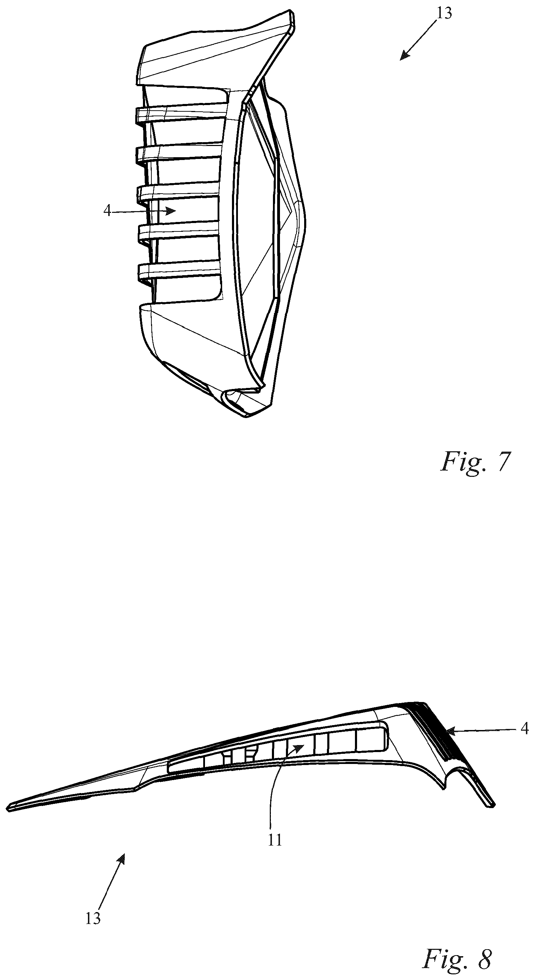

Wie insbesondere in den Figuren 2 und 5 bis 8 dargestellt, weist das Arbeitsgerät 1 (bis auf das Ausführungsbeispiel nach Fig. 2a) eine untere Eintrittsöffnung 11 auf. Die untere Eintrittsöffnung 11 ist für den Eintritt von Kühlluft in das Arbeitsgerät 1 vorgesehen. Die untere Eintrittsöffnung 11 ist zusätzlich zur Eintrittsöffnung 4 vorgesehen. Die untere Eintrittsöffnung 11 ist so angeordnet, dass Kühlluft in einer Aufwärtsrichtung 49 durch die untere Eintrittsöffnung 11 strömen kann. Der Strömungsquerschnitt der unteren Eintrittsöffnung 11 in Aufwärtsrichtung 49 gesehen ist mindestens doppelt so groß, im Ausführungsbeispiel mindestens dreimal so groß wie der Strömungsquerschnitt der unteren Eintrittsöffnung 11 in Längsrichtung gesehen. Die Aufwärtsrichtung 49 erstreckt sich in Richtung quer zur Längsrichtung 50. Die Aufwärtsrichtung 49 erstreckt sich in Richtung parallel zur Werkzeugebene E. Im Ausführungsbeispiel erstreckt sich die Aufwärtsrichtung 49 in Richtung senkrecht zur Längsrichtung 50. Wenn das Arbeitsgerät 1 auf einer Horizontalebene in der dafür vorgesehenen Abstellposition abgestellt ist, erstreckt sich die Aufwärtsrichtung 49 im Ausführungsbeispiel senkrecht zur Horizontalebene. Im Ausführungsbeispiel erstreckt sich die Aufwärtsrichtung 49 senkrecht zum Boden 17. In den Ausführungsbeispielen (mit Ausnahme der Fig. 2a) ist die untere Eintrittsöffnung 11 getrennt von der Eintrittsöffnung 4 ausgebildet. Es kann aber auch vorgesehen sein, dass eine einzige Eintrittsöffnung vorgesehen ist, durch die sowohl ein Eintritt von Kühlluft in Längsrichtung 50 als auch ein Eintritt von Kühlluft in Aufwärtsrichtung 49 in das Arbeitsgerät 1 möglich ist. In diesem Fall ist die einzige Eintrittsöffnung nur gedanklich in eine Eintrittsöffnung 4 und eine untere Eintrittsöffnung 11 unterteilt.

Das Arbeitsgerät 1 ist so ausgelegt, dass aufgrund der Schwerkraft vom Luftfilterbauteil 12 gelöster und herabfallender Schmutz durch die untere Eintrittsöffnung 11 aus dem Arbeitsgerät 1 herausfallen kann. Die untere Eintrittsöffnung 11 dient als Schmutzaustritt. In den Ausführungsbeispielen mit Ausnahme von Fig. 2a kann vorgesehen sein, dass das Luftfilterbauteil 12 in einem Winkel von mindestens 5° gegen die Aufwärtsrichtung 49 geneigt. In allen Ausführungsbeispielen erstreckt sich das Luftfilterbauteil 12 im Wesentlichen in einer Ebene.

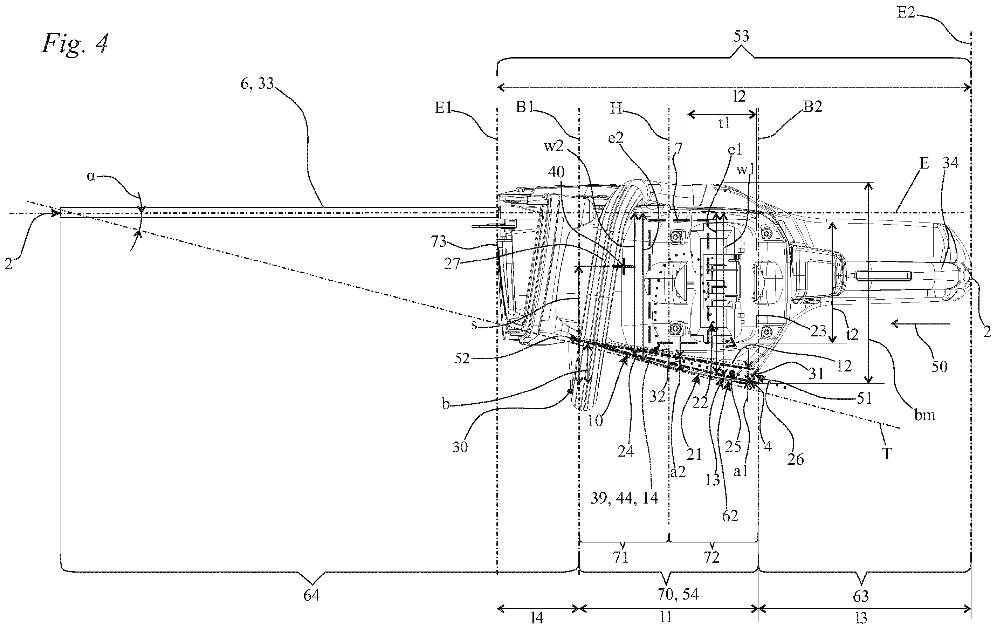

Wie in den Figuren 3 und 4 mit gestrichelter Linie schematisch eingezeichnet, besitzt das handgeführte Arbeitsgerät 1 in allen Ausführungsbeispielen mit Ausnahme des Ausführungsbeispiels nach Fig. 2a einen Eintrittsraum 24. Der Eintrittsraum 24 dient zum Eintritt von Kühlluft in das Arbeitsgerät 1. Das Arbeitsgerät 1 ist so ausgelegt, dass Kühlluft zunächst ungefiltert in den Eintrittsraum 24 eintritt.

Aus dem Eintrittsraum 24 tritt die Kühlluft dann durch das Luftfilterbauteil 12 hindurch in einen Reinluftraum 14 ein. Dies gilt für alle Ausführungsbeispiele. Der Bereich entlang des Strömungspfads 26 stromabwärts des Luftfilters 12 wird als Reinluftraum 14 bezeichnet.

In den beiden Ausführungsbeispiel nach den Figuren 1, 2, 2a, 3 und 4 tritt die Kühlluft unmittelbar nach Passieren des Luftfilterbauteils 12 in einen Innenraum 39 des Grundkörpers 37 ein. In den Eintrittsraum 24 tritt durch das Luftfilterbauteil 12 zu filternde Kühlluft in das Arbeitsgerät 1 ein. Das Luftfilterbauteil 12 begrenzt den Eintrittsraum 24.

Der Eintrittsraum 24 (in allen Ausführungsbeispielen bis auf dem nach Fig 2a vorhanden) begrenzt einen Abschnitt 25 eines Strömungspfads 26 für Kühlluft. Der Verlauf des Strömungspfads 26 im Arbeitsgerät 1 ist für sämtliche Ausführungsbeispiele in der Zusammenschau der Figuren 1, 3 und 4 zu entnehmen. Der Strömungspfad 26 ist mit gepunkteter Linie schematisch eingezeichnet. Der Strömungspfad 26 führt ausgehend von der Eintrittsöffnung 4 zum Motor 7. Die Position des Motors 7 innerhalb des Grundgehäuses 38 des Grundkörpers 37 des handgeführten Arbeitsgeräts 1 ist auch in Fig. 4 mit gestrichelter Linie schematisch eingezeichnet. Vom Motor 7 führt der Strömungspfad 26 aus dem Arbeitsgerät 1 heraus. Der Strömungspfad 26 führt durch den Eintrittsraum 24 hindurch. Der Eintrittsraum 24 ist Bestandteil des Strömungspfads 26.

Entlang des Strömungspfads 26 besitzt der Eintrittsraum 24 die in den Figuren 3 und 4 beispielhaft für alle Ausführungsbeispiele mit Ausnahme des Ausführungsbeispiels nach Fig. 2a mit gestrichelter Linie schematisch eingezeichneten Strömungsquerschnitte 31, 32. Beispielhaft sind in den Figuren 3 und 4 der erste Strömungsquerschnitt 31 und der zweite Strömungsquerschnitt 32 dargestellt. Kühlluft, die den zweiten Strömungsquerschnitt 32 passiert, hat auch den ersten Strömungsquerschnitt 31 passiert. Die Kühlluft gelangt durch den ersten Strömungsquerschnitt 31 hindurch zu dem zweiten Strömungsquerschnitt 32. Der Eintrittsraum 24 begrenzt die Strömungsquerschnitte 31, 32. Das Luftfilterbauteil 12 begrenzt die Strömungsquerschnitte 31, 32, insbesondere sämtliche Strömungsquerschnitte 31, 32. Das Luftfilterbauteil 12 liegt unmittelbar an den Strömungsquerschnitten 31, 32 an. Der erste Strömungsquerschnitt 31 ist bezüglich des Strömungspfads 26 stromaufwärts des zweiten Strömungsquerschnitts 32 angeordnet. Der zweite Strömungsquerschnitt 32 ist bezüglich des Strömungspfads 26 stromabwärts des ersten Strömungsquerschnitts 31 angeordnet. Beim Eintritt der Kühlluft in das Arbeitsgerät 1 passiert die Kühlluft den ersten Strömungsquerschnitt 31 vor dem zweiten Strömungsquerschnitt 32. Definitionsgemäß sind die Strömungsquerschnitte 31, 32 senkrecht zur Längsrichtung 50 des Arbeitsgeräts 1 orientiert. Die Strömungsquerschnitte 31, 32 verlaufen senkrecht zur Werkzeugebene E. Die Strömungsquerschnitte 31, 32 erstrecken sich in Ebenen, die senkrecht zur Längsrichtung 50 verlaufen. Die Strömungsquerschnitte 31, 32 verlaufen zumindest quer zu dem Verlauf des Strömungspfads 26. Die Strömungsquerschnitte 31, 32 werden in Richtung des Strömungspfads 26 kleiner. Die Strömungsquerschnitte 31, 32 werden in Längsrichtung 50 kleiner. Der erste Strömungsquerschnitt 31 ist größer als der zweite Strömungsquerschnitt 32. Der zweite Strömungsquerschnitt 32 ist kleiner als der erste Strömungsquerschnitt 31. Die Fläche des zweiten Strömungsquerschnitts 32 ist kleiner als die Fläche des ersten Strömungsquerschnitts 31. Das Arbeitsgerät 1 ist so ausgelegt, dass die Fläche der Strömungsquerschnitte 31, 32 in Richtung des Strömungspfads 26, insbesondere in Längsrichtung 50 abnimmt.

In den Ausführungsbeispielen (bis auf Fig. 2a) werden die Strömungsquerschnitte 31, 32 in Richtung des Strömungspfads 26, insbesondere in Längsrichtung 50 kontinuierlich kleiner.

Der Eintrittsraum 24 ist zumindest an einer Seite von einer Außenwand 10, insbesondere von einer Innenseite der Außenwand 10 des Arbeitsgeräts 1 begrenzt. Die Außenwand 10 kann eine Außenwand des Eintrittsraums 24 sein. In den Ausführungsbeispielen (bis auf Fig. 2a) ist der Eintrittsraum 24 an drei Seiten von der Außenwand 10 des Arbeitsgeräts 1 begrenzt, wie aus den Figuren 2, 3 und 4 ersichtlich ist. Die Außenwand 10 des Arbeitsgeräts 1 begrenzt das Arbeitsgerät 1 in allen Ausführungsbeispielen (auch Fig. 2a) nach außen hin. Im Bereich des Eintrittsraums 24 bildet die Außenwand 10 einen Vorsprung (bis auf Fig. 2a). In allen Ausführungsbeispielen (bis auf Fig. 2a) steht die Außenwand 10 im Bereich des Eintrittsraums 24 über den Grundkörper 37 des Arbeitsgeräts 1, insbesondere in Richtung senkrecht zur Werkzeugebene E, hervor. Die Außenwand 10 begrenzt auch den Grundkörper 37 des Arbeitsgeräts 1. Die Außenwand 10 ist zumindest teilweise die Außenwand des Grundgehäuses 38. Wie in Fig. 1 dargestellt, weist das Arbeitsgerät 1 das Luftfilterbauteil 12 zur Filterung der Kühlluft auf. Das Luftfilterbauteil 12 begrenzt den Eintrittsraum 24 zumindest teilweise. Das Luftfilterbauteil 12 ist für alle Ausführungsbeispiele bis auf Fig. 2a zwischen dem Inneren des Eintrittsraums 24 und dem Reinluftraum 14 angeordnet. Für das Ausführungsbeispiel nach den Figuren 1, 2, 3 und 4 (wenn sie Fig. 1 zugeordnet ist) ist das Luftfilterbauteil 12 zwischen dem Inneren des Eintrittsraums 24 und dem Innenraum 39 des Grundkörpers 37 des handgeführten Arbeitsgeräts 1 angeordnet. Die Lage des Innenraums 39 ist in Fig. 4 eingezeichnet. Der Innenraum 39 ist durch das Grundgehäuse 38 des Grundkörpers 37 begrenzt. Im Innenraum 39 ist der Motor 7 angeordnet. Der Innenraum 39 besitzt eine in Fig. 1 dargestellte Öffnung 41. Die Öffnung 41 ist eine Öffnung im Grundgehäuse 38 des Grundkörpers 37. Die Öffnung 41 durchdringt eine Wand des Grundgehäuses 38 vollständig. Die Öffnung 41 dient zum Eintritt von Kühlluft in den Innenraum 39. Der Innenraum 39 ist durch das Grundgehäuse 38 begrenzt. Im Ausführungsbeispiel nach den Figuren 1, 2, 3 und 4 (wenn sie Fig. 1 zugeordnet ist) ist das Luftfilterbauteil 12 in, auf oder an der Öffnung 41 angeordnet.

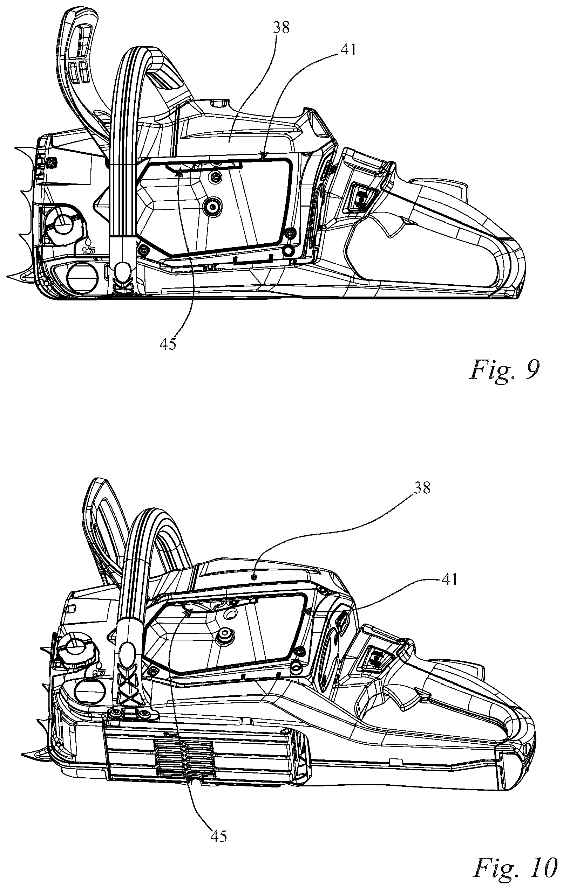

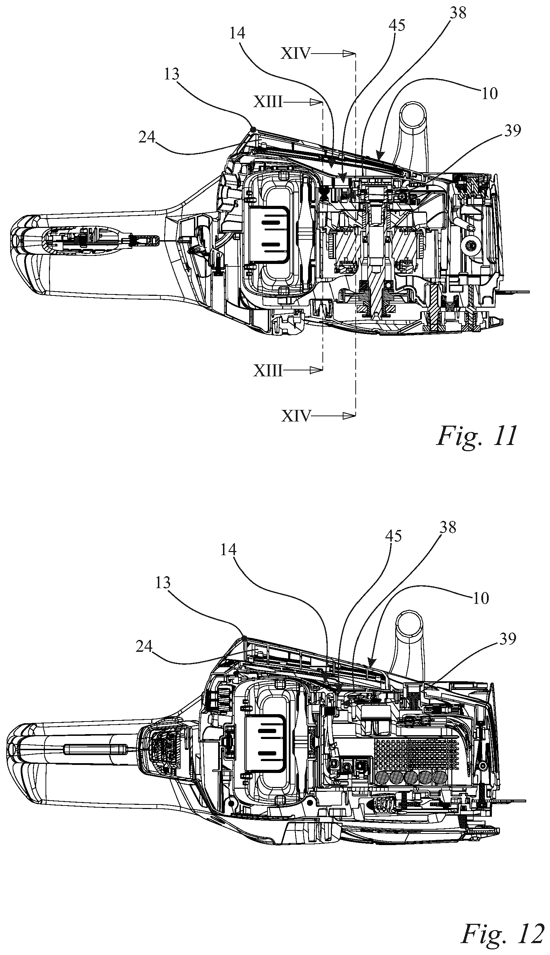

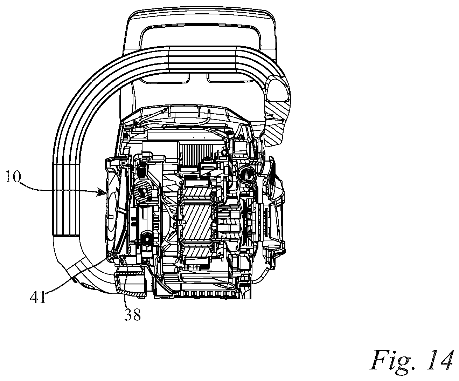

In alternativer Ausführung (Figuren 9 bis 14) kann vorgesehen sein, dass die Öffnung 41, in, an oder auf der das Luftfilterbauteil 12 angeordnet ist, eine Vertiefung im Grundgehäuse 38 des Grundkörpers 38 ist. In diesem Fall durchdringt die Öffnung 41 die Wand des Grundgehäuses 38 nicht vollständig. Diese Ausführungsvariante ist in den Figuren 9 bis 14 dargestellt. In diesem Fall besitzt das Grundgehäuse 38 eine Wanddurchdringungsöffnung 45. Die Wanddurchdringungsöffnung 45 durchdringt eine Wand des Grundgehäuses 38 vollständig. Die Wanddurchdringungsöffnung 45 ist in der Vertiefung des Grundgehäuses 38 angeordnet. Durch die Wanddurchdringungsöffnung 45 kann Kühlluft in den Innenraum 39 des Grundgehäuses 38 angesaugt werden. Durch die Wanddurchdringungsöffnung 45 kann Kühlluft in den Innenraum 39 des Grundgehäuses 38 vordringen. Zwischen dem Luftfilterbauteil 12 und der Wanddurchdringungsöffnung 45 ist die Kühlluft gefiltert. Der Bereich entlang des Strömungspfads 26 stromabwärts des Luftfilterbauteils 12 wird als Reinluftraum 14 bezeichnet. Die Vertiefung im Grundgehäuse 38 ist Teil des Reinluftraums 14, wie in den Figuren 11 und 12 dargestellt.

Die Vertiefung begrenzt den Strömungspad 26 im Bereich zwischen dem Luftfilterbauteil 12 und der Wanddurchdringungsöffnung 45 trichterförmig. Nach der Filterung der Kühlluft durch das Luftfilterbauteil 12 wird der effektive Strömungsquerschnitt entlang des Strömungspfads 26 verkleinert.

Die beispielhaft für alle Ausführungsbeispiele bis auf Fig. 2a in Fig. 2 dargestellte Eintrittsöffnung 4 bildet einen Eingang des Eintrittsraums 24. Das Luftfilterbauteil 12 bildet einen Ausgang des Eintrittsraums 24. Gleichzeitig bildet das Luftfilterbauteil 12 eine Seitenwand des Eintrittsraums 24. Einerseits strömt Kühlluft entlang des Luftfilterbauteils 12 und andererseits kann durch das Luftfilterbauteil 12 Kühlluft in den Reinluftraum 14 eintreten.

Durch das Luftfilterbauteil 12 kann Luft aus dem Eintrittsraum 24 in den Innenraum 39 durch die Öffnung 41 des Grundgehäuses 38 vordringen. Im Ausführungsbeispiel nach den Figuren 1, 2, 3 und 4 (solange sie Fig. 1 zugeordnet ist) tritt die Kühlluft durch das Luftfilterbauteil 12 hindurch unmittelbar in den Innenraum 39 ein. Im Ausführungsbeispiel nach den Figuren 9 bis 14 passiert die Kühlluft zwischen dem Luftfilterbauteil 12 und dem Innenraum 39 die Vertiefung. Das Luftfilterbauteil 12 bildet gleichzeitig einen Ausgang des Eintrittsraums 24 und begrenzt den Eintrittsraum 24. In allen Ausführungsbeispielen mit Ausnahme von Fig. 2a begrenzt das Luftfilterbauteil 12 den Eintrittsraum 24 in Richtung senkrecht zur Werkzeugebene E.

Der Eintrittsraum 24 besitzt ein Raumvolumen. Das Raumvolumen ist das Volumen des Eintrittsraums 24, das mit Kühlluft gefüllt werden kann. Bezüglich der Längsrichtung 50 besitzt das Raumvolumen einen hintersten Punkt. Der hinterste Punkt des Raumvolumens besitzt den größten in Längsrichtung 50 gemessenen Abstand zu dem Werkzeug 6. Der hinterste Punkt des Raumvolumens besitzt den größten in Längsrichtung 50 gemessenen Abstand zu dem vorderen Ende 2 des Arbeitsgeräts 1. Bezüglich der Längsrichtung 50 besitzt das Raumvolumen einen vordersten Punkt. Der vorderste Punkt liegt bezüglich der Längsrichtung 50 vor dem hintersten Punkt. Der vorderste Punkt liegt entlang der Längsrichtung 50 vor dem hintersten Punkt. Der vorderste Punkt des Raumvolumens besitzt den größten in Längsrichtung 50 gemessenen Abstand zu dem Bediengriff 34. Der vorderste Punkt des Raumvolumens besitzt den größten in Längsrichtung 50 gemessenen Abstand zu dem hinteren Ende 3 des Arbeitsgeräts 1. Eine Längserstreckung 54 des Eintrittsraums 24 erstreckt sich in Längsrichtung 50 von dem vordersten Punkt des Eintrittsraums 24 bis zu dem hintersten Punkt des Eintrittsraums 24.

Wie in Fig. 2 beispielhaft für alle Ausführungsbeispiele bis auf Fig. 2a dargestellt, besitzt die Öffnung 41 eine Längsausdehnung f. Die Längsausdehnung f ist in Längsrichtung 50 gemessen. Der Eintrittsraum 24 besitzt eine in Längsrichtung 50 gemessene Länge l. Der Eintrittsraum 12 erstreckt sich längs der Längsrichtung 50. Die in Längsrichtung 50 gemessene Länge der Längserstreckung 54 des Eintrittsraums 24 entspricht der Länge l des Eintrittsraums 24. Die Länge l ist von dem hintersten Punkt des Eintrittsraums 24 bis zu dem vordersten Punkt des Eintrittsraums 24 gemessen. Das Luftfilterbauteil 12 begrenzt den Eintrittsraum 12 in Richtung quer zu seiner eigenen Längserstreckung. Im Ausführungsbeispiel beträgt die Längsausdehnung f der Öffnung 41 mindestens 70%, insbesondere mindestens 80%, vorteilhaft mindestens 85% der Länge l des Eintrittsraums 24. Kühlluft kann also über einen sehr großen Teil der Längserstreckung des Eintrittsraums 24 aus dem Eintrittsraum 24 durch die Öffnung 41, insbesondere durch das Luftfilterbauteil 12 in den Reinluftraum 14, insbesondere in den Innenraum 39 des Grundkörpers 37 des handgeführten Arbeitsgeräts 1 vordringen. Gewissermaßen ist der Eintrittsraum 24 entlang seiner Längsausdehnung über große Teile offen. Der Eintrittsraum 24 kann auch als halboffen bezeichnet werden.

Die Kühlluft strömt im Eintrittsraum 24 entlang einer Filterfläche des Luftfilterbauteils 12. Die Kühlluft tritt durch das Luftfilterbauteil 12 während des Entlangströmens entlang der Filterfläche nach und nach in den Reinluftraum 14 des Arbeitsgeräts 1 ein.

Der Eintrittsraum 24 kann auch als Strömungskanal bezeichnet werden.

Wie in Fig. 4 dargestellt, besitzt der Eintrittsraum 24 eine in Richtung senkrecht zur Werkzeugebene E gemessene, in Längsrichtung 50 variierende Breite a1, a2. Die Breite a1, a2 ist zwischen der Innenseite der Außenwand 10 und dem Luftfilterbauteil 12 gemessen. Die erste Breite a1 ist an der Eintrittsöffnung 4 gemessen. Die erste Breite a1 an der Eintrittsöffnung 4 entspricht der maximalen Breite des Eintrittsraums 24. In Längsrichtung 50 nimmt die Breite des Eintrittsraums 24 kontinuierlich ab. Die zweite Breite a2 ist bezüglich der Längsrichtung 50 im Bereich des Motors 7 gemessen. Die zweite Breite a2 ist bezüglich des Strömungspfads 26 stromabwärts der ersten Breite a1 gemessen. Die zweite Breite a2 ist kleiner als die erste Breite a1. Die erste Breite a1 ist dem ersten Strömungsquerschnitt 31 zugeordnet. Die zweite Breite a2 ist dem zweiten Strömungsquerschnitt 32 zugeordnet. Die erste Breite a1 ist die Breite des ersten Strömungsquerschnitts 31. Die zweite Breite a2 ist die Breite des zweiten Strömungsquerschnitts 32. Der Eintrittsraum 24 ist im Wesentlichen keilförmig. Insbesondere ist der Eintrittsraum 24 in Ansicht senkrecht zur Längsrichtung 50 und gleichzeitig parallel zur Werkzeugebene E im Wesentlichen keilförmig. In der Abstellposition ist der Eintrittsraum 24 in Ansicht senkrecht zur Horizontalebene keilförmig.

Beim Ansaugen von Kühlluft in das Innere des Arbeitsgeräts 1 durch ein nicht dargestelltes Gebläse, insbesondere durch ein nicht dargestelltes Gebläserad, tritt die Kühlluft bei den Ausführungsbeispielen nach den Figuren 1, 2, 3, 4 (wenn Fig. 1 oder 9 zugeordnet) und 9 bis 14 durch die Eintrittsöffnung 4, beim Ausführungsbeispiel nach Fig. 2a und 4 (wenn Fig. 2a zugeordnet) unmittelbar durch das Luftfilterbauteil 12 in das Arbeitsgerät 1 ein. Die Kühlluft folgt dem Strömungspfad 26. Hierbei strömt die Kühlluft im Eintrittsraum 24 (Figuren 1, 2, 3, 4 (wenn Figuren 1 und 9 zugeordnet) und 9 bis 14/mit Ausnahme der Fig. 2a) entlang des Luftfilterbauteils 12. Während des Entlangströmens der Kühlluft entlang des Luftfilterbauteils 12 kann Kühlluft den Eintrittsraum 24 durch das Luftfilterbauteil 12 hindurch verlassen. Auf diese Weise tritt während des Entlangströmens der Kühlluft entlang des Luftfilterbauteils 12 immer mehr Luft aus dem Eintrittsraum 24 durch das Luftfilterbauteil 12 aus und durch die dahinter liegende Öffnung 41 in den Reinluftraum 14, insbesondere in den Innenraum 39 ein. Auf dieses Weise wird das Luftvolumen, das die Strömungsquerschnitte 31, 32 passiert, entlang des Strömungspfads 26, insbesondere in Längsrichtung 50, innerhalb des Eintrittsraums 24 immer kleiner. Dadurch, dass die Strömungsquerschnitte 31, 32 in Richtung des Strömungspfads 26 kleiner werden, kann der Volumenstrom der Kühlluft im Eintrittsraum 24 dennoch annähernd konstant gehalten werden. Dadurch ergeben sich gleichmäßige Strömungsverhältnisse.

Wie in Fig. 3 (und auch in den Figuren 2 und 2a) beispielhaft für alle Ausführungsbeispiele dargestellt und nachstehend für alle Ausführungsbeispiele (auch das nach Fig. 2a) beschrieben, weist das Grundgehäuse 38, insbesondere das Gehäuse 5 eine dem Boden 17 gegenüberliegende Gehäusedecke 20 auf. Die Gehäusedecke 20 begrenzt das Grundgehäuse 38, insbesondere das Gehäuse 5 des Arbeitsgeräts 1 in einer Aufwärtsrichtung 49. Die Aufwärtsrichtung 49 verläuft senkrecht zur Längsrichtung 50 und gleichzeitig parallel zur Werkzeugebene E. Die Aufwärtsrichtung 49 verläuft, wenn das Arbeitsgerät 1 in der Abstellposition auf der Horizontalebene abgestellt ist, senkrecht zur Horizontaleben nach oben. Der Boden 17 begrenzt das Grundgehäuse 38, insbesondere das Gehäuse 5 in Richtung entgegen der Aufwärtsrichtung 49. Das Grundgehäuse 38, insbesondere das Gehäuse 5 weist eine erste Seitenfläche 21 auf. Die erste Seitenfläche 21 verbindet die Gehäusedecke 20 mit dem Boden 17. Die erste Seitenfläche 21 ist Bestandteil der Außenwand 10. Die erste Seitenfläche 21 erstreckt sich in Längsrichtung 50. Das Grundgehäuse 38, insbesondere das Gehäuse 5 des Arbeitsgeräts 1 weist eine zweite Seitenfläche 42 auf. Die zweite Seitenfläche 42 verbindet die Gehäusedecke 20 mit dem Boden 17. Die zweite Seitenfläche 42 erstreckt sich in Längsrichtung 50. Die erste Seitenfläche 21 liegt der zweiten Seitenfläche 42 gegenüber, insbesondere in Richtung senkrecht zur Werkzeugebene E. Die erste Seitenfläche 21 begrenzt das Grundgehäuse 38, insbesondere das Gehäuse 5 in Richtung senkrecht zur Werkzeugebene E auf der ersten Seite 46 der Werkzeugebene E. Die zweite Seitenfläche 41 begrenzt das Grundgehäuse 38, insbesondere das Gehäuse 5 des Arbeitsgeräts 1 auf der zweiten Seite 47 der Werkzeugebene E. Die erste Seitenfläche 21 erstreckt sich zwischen der Gehäusedecke 20 und dem Boden 17. Das Luftfilterbauteil 12 ist an der ersten Seitenfläche 21 des Grundgehäuses 38 des Grundkörpers 37 des handgeführten Arbeitsgeräts 1 angeordnet. Die Öffnung 41 im Grundgehäuse 38 ist an der ersten Seitenfläche 21 des Grundgehäuses 38 angeordnet. Die erste Seitenfläche 21 bildet eine Außenseite des Arbeitsgeräts 1, insbesondere des Gehäuses 5 des Arbeitsgeräts 1. Das Luftfilterbauteil 12 ist in allen Ausführungsbeispielen an der ersten Seitenfläche 21 angeordnet. Im Ausführungsbeispiel nach Fig. 2a ist das Luftfilterbauteil 12 Bestandteil der ersten Seitenfläche 21. Das Luftfilterbauteil 12 bildet einen Teil der ersten Seitenfläche 21. In den übrigen Ausführungsbeispielen ist das Luftfilterbauteil 12 im Bereich der ersten Seitenfläche 21 angeordnet. In diesen übrigen Ausführungsbeispielen überdeckt die erste Seitenfläche 21 das Luftfilterbauteil 12. Das Luftfilterbauteil 12 ist in allen Ausführungsbeispielen auf der ersten Seite 46 der Werkzeugebene E angeordnet. Das Luftfilterbauteil 12 ist bezüglich der Richtung senkrecht zur Werkzeugebene E näher an der ersten Seitenfläche 21 angeordnet als an der Werkzeugebene E. Ein in Richtung senkrecht zur Werkzeugebene E gemessener Abstand des Luftfilterbauteils 12 zur Werkzeugebene E ist mindestens fünf Mal, im Ausführungsbeispiel mindesten zehn Mal so groß wie ein in Richtung senkrecht zur Filterfläche des Luftfilterbauteils 12 gemessener Abstand der Filterfläche des Luftfilterbauteils 12 zu der ersten Seitenfläche 21.

Wie in Fig. 2 beispielhaft für alle Ausführungsbeispiele dargestellt, besitzt das Luftfilterbauteil 12 in einer gedachten Projektion in Richtung senkrecht zur Werkzeugebene E auf die Werkzeugebene E eine Filteraußenkontur 28. Die Filteraußenkontur 28 begrenzt eine gedachte Filterfläche 29. Die Filterfläche 29 erstreckt sich in der Werkzeugebene E. In Fig. 2 ist die Filterfläche 29 mit gestrichelter Linie schematisch eingezeichnet. Die Filterfläche 29 beträgt mindestens 5%, insbesondere mindestens 10%, im Ausführungsbeispiel mindestens 15% der Gehäusefläche 9. Die Filterfläche 29 beträgt mindestens 100 cm², im Ausführungsbeispiel mindestens 125 cm². Die Flächen sind in Projektion in die Werkzeugebene E gemessen. Diese Flächen sind insbesondere in Seitenansicht senkrecht auf die Werkzeugebene E gemessen.

Wie in Fig. 4 beispielhaft für alle Ausführungsbeispiele dargestellt, weist das Luftfilterbauteil 12 in Längsrichtung 50 eine Filterlängserstreckung 70 auf. Das Luftfilterbauteil 12 ist zwischen einer ersten gedachten Berührebene B1 und einer zweiten gedachten Berühreben B2 angeordnet. Die erste Berührebene B1 und die zweite Berührebene B2 verlaufen jeweils senkrecht zur Längsrichtung 50. Das Luftfilterbauteil 12 erstreckt sich insbesondere von der ersten gedachten Berührebene B1 bis zur zweiten gedachten Berührebene B2.

Der Luftfilterbauteil 12 besitzt ein Griffende 51. Das Griffende 51 des Luftfilterbauteils 12 ist dem Bediengriff 34 zugewandt. Das Griffende 51 begrenzt das Luftfilterbauteil 12 in Richtung entgegen der Längsrichtung 50. Das Luftfilterbauteil 12 besitzt ein Werkzeugende 52. Das Werkzeugende 52 des Luftfilterbauteils 12 ist dem Werkzeug 6 zugewandt. Das Werkzeugende 52 begrenzt das Luftfilterbauteil 12 in Längsrichtung 50. Im Bereich des Werkzeugendes 52 ist der Bügelgriff 30 angeordnet.

Die erste Berührebene B1 tangiert das Luftfilterbauteil 12 an dem Griffende 51 des Luftfilterbauteils 1. Die zweite Berührebene B2 tangiert das Luftfilterbauteil 12 an dem Werkzeugende 52 des Luftfilterbauteils 12. Die Filterlängserstreckung 70, insbesondere der Bereich der Filterlängserstreckung 70 des Luftfilterbauteils 12 erstreckt sich in Längsrichtung 50 von dem Griffende 51 bis zu dem Werkzeugende 52. Der Bereich der Filterlängserstreckung 70 ist in allen Ausführungsbeispielen bezüglich der Längsrichtung 50 zwischen, insbesondere vollständig zwischen, dem Bediengriff 34 und dem Werkzeug 6 angeordnet. Die Filterlängserstreckung 70 erstreckt sich zwischen, insbesondere von der ersten Berührebene B1 bis zu der zweiten Berührebene B2. Der Bereich der Filterlängserstreckung 70 erstreckt sich zwischen, insbesondere von der ersten Berührebene B1 bis zu der zweiten Berührebene B2. Der Bereich der Filterlängserstreckung 70 ist der gesamte Raum zwischen den beiden Berührebenen B1 und B2.

Die Filterlängserstreckung 70 des Filterbauteils 12 liegt bezüglich der Längsrichtung 50 zwischen einem hinteren Bereich 63 des Arbeitsgeräts 1 und einem vorderen Bereich 64 des Arbeitsgeräts 1. Der hintere Bereich 63 des Arbeitsgeräts 1 erstreckt sich bezüglich der Längsrichtung 50 von dem hinteren Ende 2 des Arbeitsgeräts 1 bis zu dem Luftfilterbauteil 12, insbesondere bis zu der Filterlängserstreckung 70 des Luftfilterbauteils 12, insbesondere bis zu der zweiten Berührebene B2. Der vordere Bereich 64 des Arbeitsgeräts 1 erstreckt sich bezüglich der Längsrichtung 50 von dem Luftfilterbauteil 12, insbesondere von der Filterlängserstreckung 70 des Luftfilterbauteils 12, insbesondere von der ersten Berührebene B1, bis zu dem vorderen Ende 3 des Arbeitsgeräts 1. Im hinteren Bereich 63 ist in den Ausführungsbeispielen der Bediengriff 34 angeordnet. Es kann aber auch vorgesehen sein, dass der Bediengriff lediglich teilweise oder gar nicht im hinteren Bereich 63 angeordnet ist. Dies kann beispielsweise bei einer Baumpflegesäge der Fall sein. Das Werkzeug 6 ist in den Ausführungsbeispielen zumindest teilweise, insbesondere nahezu vollständig im vorderen Bereich 64 angeordnet. Das Luftfilterbauteil 12, insbesondere die Filterlängserstreckung 70 des Luftfilterbauteils 12 liegt bezüglich der Längsrichtung 50 vor dem hinteren Bereich 63. Das Luftfilterbauteil 12, insbesondere die Filterlängserstreckung 70 liegt bezüglich der Längsrichtung 50 hinter dem vorderen Bereich 64, insbesondere hinter der ersten Berührebene B1.

Das Grundgehäuse 38 besitzt in Längsrichtung 50 eine Grundlängserstreckung 53. Die Grundlängserstreckung 53 erstreckt sich in Längsrichtung 50 von dem hinteren Ende 2 des Arbeitsgeräts 1 bis zu einem Endpunkt 73 des Grundgehäuses 38. Der Endpunkt 73 begrenzt das Grundgehäuse 38 in Längsrichtung 50. Am Endpunkt 73 tangiert eine gedachte, senkrecht zur Werkzeugebne E verlaufende erste Ebene E1 das dem hinteren Ende 2 des Arbeitsgeräts 1 abgewandte Längsende des Grundgehäuses 38. Am hinteren Ende 2 tangiert ein gedachte, senkrecht zur Werkzeugebene E verlaufende zweite Ebene E2 das hintere Ende 2 des Arbeitsgeräts 1. Die Grundlängserstreckung 53 verläuft von der dem hinteren Ende 2 zugeordneten zweiten Ebene E2 bis zu der dem Endpunkt 73 zugeordneten ersten Ebene E1. Der Raum zwischen der ersten Ebene E1 und der zweiten Ebene E2 wird als Bereich der Grundlängserstreckung 53 bezeichnet.

Der hintere Bereich 63 ist der Raum, der zwischen der zweiten Berührebene B2 und der zweiten Ebene E2 liegt. Der vordere Bereich 64 ist der Raum, der zwischen der ersten Berührebene B1 und der ersten Ebene E1 liegt.

Eine in Längsrichtung 50 gemessene Filterlänge l1 der Filterlängserstreckung 70 beträgt mindestens 20%, insbesondere mindestens 30% einer in Längsrichtung 50 gemessenen Grundlänge l2 der Grundlängserstreckung 53. Die Filterlänge l1 beträgt höchstens 60%, insbesondere höchstens 50% der Grundlänge l2.

Die Filterlängserstreckung 70 besitzt zu dem Startpunkt der Grundlängserstreckung 53, insbesondere zu dem hinteren Ende 2, einen in Längsrichtung 50 gemessenen hinteren Abstand l3 von mindestens 30%, insbesondere von mindestens 40% der Grundlänge l2. Das Filterbauteil 12 besitzt zu dem Startpunkt der Grundlängserstreckung 53, insbesondere zu dem hinteren Ende 2, den in Längsrichtung 50 gemessenen hinteren Abstand l3 von mindestens 30%, insbesondere von mindestens 40% der Grundlänge l2. Die Filterlängserstreckung 70 besitzt zu dem Endpunkt der Grundlängserstreckung 53, insbesondere zu dem Endpunkt 38 des Grundgehäuses 38, einen in Längsrichtung 50 gemessenen vorderen Abstand l4 von mindestens 10%, insbesondere von mindestens 15% der Grundlänge l2. Das Luftfilterbauteil 12 besitzt zu dem Endpunkt der Grundlängserstreckung 53, insbesondere zu dem Endpunkt 73 des Grundgehäuses 38 den in Längsrichtung 50 gemessenen vorderen Abstand l4 von mindestens 10%, insbesondere von mindestens 15% der Grundlänge l2.

Die Filterlängserstreckung 70 besitzt zu dem Startpunkt der Grundlängserstreckung 53, insbesondere zu dem hinteren Ende 2, den in Längsrichtung 50 gemessenen hinteren Abstand l3 von höchstens 60%, insbesondere von höchstens 50% der Grundlänge l2. Das Luftfilterbauteil 12 besitzt zu dem Startpunkt der Grundlängserstreckung 53, insbesondere zu dem hinteren Ende 2, den in Längsrichtung 50 gemessenen hinteren Abstand l3 von höchstens 60%, insbesondere von höchstens 50% der Grundlänge l2. Die Filterlängserstreckung 70 besitzt zu dem Endpunkt der Grundlängserstreckung 53, insbesondere zu dem Endpunkt 73 des Grundgehäuses 38 den in Längsrichtung 50 gemessenen vorderen Abstand l4 von höchstens 40%, insbesondere von höchstens 20% der Grundlänge l2. Das Luftfilterbauteil 12 besitzt zu dem Endpunkt der Grundlängserstreckung 53, insbesondere zu dem Endpunkt 73 des Grundgehäuses 38, den in Längsrichtung 50 gemessenen vorderen Abstand l4 von höchstens 40%, insbesondere von höchstens 20% der Grundlänge l2.

Die Grundlänge l2 entspricht dem Abstand der ersten Ebene E1 zu der zweiten Ebene E2. Die Filterlänge l1 entspricht dem Abstand der ersten Berührebene B1 zu der zweiten Berührebene B2. Der hintere Abstand l3 entspricht dem Abstand der zweiten Ebene E2 zu der zweiten Berührebene B2. Der vordere Abstand l4 entspricht dem Abstand der ersten Berührebene B1 zu der ersten Ebene E1.

Der Bereich des Luftfilterbauteils 12 erstreckt sich in Längsrichtung 50 über die Filterlängserstreckung 70.

Fig. 4 zeigt beispielhaft für alle Ausführungsbeispiele eine gedachte Tangentialebene T. Die Darstellung in Fig. 4 zeigt schematisch die Verhältnisse für sämtliche Ausführungsbeispiele. Die Beschreibung zu Fig. 4 trifft auf alle Ausführungsbeispiele zu. In Fig. 4 sind Bezugszeichen aus allen Ausführungsbeispielen verwendet. Fig. 4 kann aber wahlweise jedem der drei Ausführungsbeispiele zugeordnet werden. Wenn Fig. 4 für das Ausführungsbeispiel nach Fig. 1 steht, dann ist liegt der Innenraum 39 unmittelbar hinter dem Filterbauteil 12. Wenn Fig. 4 für das Ausführungsbeispiel nach Fig. 2a steht, dann weist das Arbeitsgerät 1 in Fig. 4 keinen Filterdeckel 13 und keine Eintrittsöffnung 4 auf, sondern eine seitliche Eintrittsöffnung 62.

Für alle Ausführungsbeispiele verläuft die Tangentialebene T in der Abstellposition des Arbeitsgeräts 1 senkrecht zur Horizontalebene.

Die Tangentialebene T tangiert die erste Seitenfläche 21 im Bereich der Filterlängserstreckung 70 lediglich. Die Tangentialebene T liegt im Bereich der Filterlängserstreckung 70 an der ersten Seitenfläche 21, insbesondere an der Außenseite der ersten Seitenfläche 21, lediglich an. Die Tangentialebene T schneidet die erste Seitenfläche 21 im Bereich der Filterlängserstreckung 70 nicht. Die Tangentialebene T tangiert das Gehäuse 5 des Arbeitsgeräts 1 im Bereich der Filterlängserstreckung 70 lediglich. Die Tangentialebene T tangiert die Außenseite des Gehäuses 5 des Arbeitsgeräts 1 im Bereich der Filterlängserstreckung 70 lediglich. Die Tangentialebene T tangiert die Außenwand 10 im Bereich der Filterlängserstreckung 70 lediglich. Es kann vorgesehen sein, dass die Tangentialebene T das Arbeitsgerät 1, insbesondere die erste Seitenfläche 21, insbesondere das Gehäuse 5, insbesondere die Außenwand 10 im Bereich außerhalb der Filterlängserstreckung 70, insbesondere im vorderen Bereich 64 und/oder im hinteren Bereich 63 schneidet.

Im Bereich der Filterlängserstreckung 70 ist die Tangentialebene T auf der ersten Seite 46 der Werkzeugebene E angeordnet. Die Tangentialebene T tangiert die erste Seitenfläche 21 im Bereich der Filterlängserstreckung 70 auf der ersten Seite 46 der Werkzeugebene E.

Die Tangentialebene T schneidet die Werkzeugebene E. Die Tangentialebene T schneidet die Werkzeugebene E im Bereich bezüglich der Längsrichtung 50 vor dem Luftfilterbauteil 12, insbesondere im Bereich bezüglich der Längsrichtung 50 vor der Filterlängserstreckung 70, insbesondere im vorderen Bereich 64, insbesondere in einem Bereich bezüglich der Längsrichtung 50 vor de, vorderen Bereich 64. In Längsrichtung 50 gesehen liegt die Schnittgerade von Tangentialebene T und Werkzeugebene E vor dem Luftfilterbauteil 12, insbesondere vor der Filterlängserstreckung 70, insbesondere vor der ersten Berührebene B1. Im Bereich bezüglich der Längsrichtung 50 hinter dem Luftfilterbauteil 12 schneidet die Tangentialebene T die Werkzeugebene E nicht.

Die Filterlängserstreckung 54 des Luftfilterbauteils 12 besitzt eine vordere Hälfte 71 und eine hintere Hälfte 72. Die vordere Hälfte 71 der Filterlängserstreckung 70 ist bezüglich der Längsrichtung 50 vor der hinteren Hälfte 72 der Filterlängserstreckung 70 angeordnet. Die hintere Hälfte 72 der Filterlängserstreckung 70 ist bezüglich der Längsrichtung 50 näher am Bediengriff 34 angeordnet als die vordere Hälfte 71 der Filterlängserstreckung 70. Die vordere Hälfte 71 der Filterlängserstreckung 70 ist bezüglich der Längsrichtung 50 näher am Werkzeug 6 angeordnet als die hintere Hälfte 72 der Filterlängserstreckung 70. Die vordere Hälfte 71 ist dem Werkzeug 6 zugewandt. Die hintere Hälfte 72 ist dem Bediengriff 34 zugewandt. Die hintere Hälfte 72 und die vordere Hälfte 71 sind in Längsrichtung 50 gemessen gleich groß. Eine Hälftenebene H verläuft senkrecht zur Längsrichtung 50. Die Hälftenebene H teilt den Raum zwischen der ersten Berührebene B1 und der zweiten Berührebene B2 in zwei gleich große Hälften. Die Hälftenebene H liegt bezüglich der Längsrichtung 50 in der Mitte zwischen der ersten Berührebene B1 und der zweiten Berührebene B2. Die hintere Hälfte 72 liegt zwischen der zweiten Berührebene B2 und der Hälftenebene H. Die vordere Hälfte 71 liegt zwischen der Hälftenebene H und der ersten Berührebene B1. Der Bereich der hinteren Hälfte 72 entspricht dem Raum zwischen der zweiten Berührebene B2 und der Hälftenebene H. Der Bereich der vorderen Hälfte 71 entspricht dem Raum zwischen der Hälftenebene H und der ersten Berührebene B1.

Die Tangentialebene T tangiert die erste Seitenfläche 21 des Arbeitsgeräts 1 im Bereich der Filterlängserstreckung 70 ausschließlich in der hinteren Hälfte 72, insbesondere ausschließlich im Bereich der hinteren Hälfte 72. Die Tangentialebene T liegt im Bereich der hinteren Hälfte 72 der Filterlängserstreckung 70 an der ersten Seitenfläche 21, insbesondere an der Außenseite der ersten Seitenfläche 21, lediglich an. Die Tangentialebene T schneidet die erste Seitenfläche 21 im Bereich der hinteren Hälfte 72 nicht. Die Tangentialebene T tangiert das Gehäuse 5 des Arbeitsgeräts 1 im Bereich der Filterlängserstreckung 70 lediglich im Bereich der hinteren Hälfte 72 der Filterlängserstreckung 70. Die Tangentialebene T tangiert die Außenseite des Gehäuses 5 des Arbeitsgeräts 1 im Bereich der Filterlängserstreckung 70 lediglich im Bereich der hinteren Hälfte 72 der Filterlängserstreckung 70. Die Tangentialebene T tangiert die Außenwand 10 im Bereich der Filterlängserstreckung 70 lediglich im Bereich der hinteren Hälfte 72 der Filterlängserstreckung 70. Die Tangentialebene T schneidet die erste Seitenfläche 21 des Arbeitsgeräts 1, insbesondere das Gehäuse 5 des Arbeitsgeräts 1, insbesondere die Außenseite des Gehäuses 5 des Arbeitsgeräts 1, insbesondere die Außenwand 10, im Bereich der vordere Hälfte 71 der Filterlängserstreckung 70 nicht. Die Tangentialebene T tangiert die erste Seitenfläche 21, insbesondere das Gehäuse 5 des Arbeitsgeräts 1, insbesondere die Außenseite des Gehäuses 5 des Arbeitsgeräts 1, insbesondere die Außenwand 10, im Bereich der vordere Hälfte 71 der Filterlängserstreckung 70 nicht. Die Tangentialebene T tangiert die erste Seitenfläche 21 im Bereich des Eintrittsraums 24, insbesondere im Bereich der Längserstreckung 54 des Eintrittsraums 24, ausschließlich im Bereich der bezüglich der Längsrichtung 50 hinteren Hälfte des Bereichs des Eintrittsraums 24.

Es kann vorgesehen sein, dass die Tangentialebene T das Arbeitsgerät 1, insbesondere die erste Seitenfläche 21, insbesondere das Gehäuse 5, insbesondere die Außenwand 10 im Bereich außerhalb der Filterlängserstreckung 70, insbesondere im vorderen Bereich 64 und/oder im hinteren Bereich 63 schneidet.

Die Filterlängserstreckung 70 teilt den gesamten Raum in drei Abschnitte. In einem mittleren Abschnitt liegt die Filterlängserstreckung 70 zwischen der ersten Berührebene B1 und der zweiten Berührebene B2. An die zweite Berührebene B2 grenzt ein hinterer Abschnitt an. In dem hinteren Abschnitt liegt das hintere Ende 2. An die erste Berührebene B1 grenzt ein vorderer Abschnitt an. Im vorderen Abschnitt liegt das vordere Ende 3 des Arbeitsgeräts 1. Die Tangentialebene T schneidet die Werkzeugebene E in dem vorderen Abschnitt.

Wie in Fig. 4 dargestellt, nimmt ein senkrecht zur Werkzeugebene E gemessener Ebenenabstand e1, e2 der Tangentialebene T zu der Werkzeugebene E in Längsrichtung 50 abnimmt. Der Ebenenabstand e1, e2 ist kein Abstand von Ebenen im geometrischen Sinn, sondern der Abstand einzelner Punkte bzw. Geraden, die innerhalb der beiden Ebenen liegen. Ein erster Ebenenabstand e1 ist im Bereich der zweiten Berührebene B2 gemessen. Ein zweiter Ebenenabstand e2 ist im Bereich des Bügelgriffs 27, insbesondere im Bereich der ersten Berührebene B1 gemessen. Der zweite Ebenenabstand e2 ist kleiner als der erste Ebenenabstand e1.

Die Tangentialebene T schließt mit der Werkzeugebene E einen Winkel α ein. Der Winkel α ist in dem Winkelbereich gemessen, in dem auch das Luftfilterbauteil 12 liegt. Der Winkel α beträgt mindestens 1°, im Ausführungsbeispiel mindestens 3°. Der Winkel α beträgt höchstens 45°, im Ausführungsbeispiel höchstens 20°. Das Luftfilterbauteil 12 ist vollständig in einem entsprechenden Winkelbereich angeordnet.

Wie in Fig. 4 dargestellt, besitzt die Außenseite der ersten Seitenfläche 21 einen senkrecht zur Werkzeugebene E gemessenen Außenseitenabstand w1, w2 zu der Werkzeugebene E. Der Außenseitenabstand w1, w2 ist kein Abstand im geometrischen Sinn, sondern der Abstand einzelner Punkte der Außenseite der Außenseite der ersten Seitenfläche 21 zu der Werkzeugebene E. Der Außenseitenabstand w1, w2 nimmt im Bereich des Luftfilterbauteils 12, insbesondere im Bereich des Eintrittsraums 24, in Längsrichtung 50 ab.

Der Bereich des Eintrittsraums 24 ist der Bereich, in dem sich der Eintrittsraum 24 bezüglich der Längsrichtung 50 erstreckt. Die Längserstreckung 54 des Eintrittsraums 24 erstreckt sich in Längsrichtung 50 von dem vordersten Punkt des Eintrittsraums 24 bis zu dem hintersten Punkt des Eintrittsraums 24. Der Bereich des Eintrittsraums 24 erstreckt sich in Längsrichtung 50 von dem vordersten Punkt des Eintrittsraums 24 bis zu dem hintersten Punkt des Eintrittsraums 24. Die Längserstreckung 54 des Eintrittsraums 24 wird auch als Bereich des Eintrittsraums 24 bezeichnet. Der Bereich des Eintrittsraums 24 besitzt eine bezüglich der Längsrichtung 50 vordere Hälfte und eine bezüglich der Längsrichtung 50 hintere Hälfte.

Ein erster Außenseitenabstand w1 ist im Bereich des Griffendes 51 des Luftfilterbauteils 12, insbesondere im Bereich der zweiten Berührebene B1, gemessen. Ein zweiter Außenseitenabstand w2 ist im Bereich des Werkzeugendes 52, insbesondere im Bereich der ersten Berührebene B1, insbesondere im Bereich des Bügelgriffs 27 gemessen. Der zweite Außenseitenabstand w2 ist kleiner als der erste Außenseitenabstand w1.

Der Bügelgriff 27 weist einen Bügelabschnitt 30 auf. Der Bügelabschnitt 30 liegt in Richtung senkrecht zur Werkzeugebene E über dem Luftfilterbauteil 12. Der Bügelabschnitt 12 liegt im Bereich der Filterlängserstreckung 70. Der Bügelabschnitt 30 erstreckt sich in allen Ausführungsbeispielen im Wesentlichen, insbesondere genau in Richtung parallel zur Werkzeugebene E. Der Bügelabschnitt 30 erstreckt sich in allen Ausführungsbeispielen quer, insbesondere senkrecht zur Längsrichtung 50. Der Bügelabschnitt 30 ist insbesondere vollständig gerade. Zweckmäßig besitzt der Bügelgriff 27 im Bereich des Bügelabschnitts 30 nahezu keine Krümmung bezüglich der Aufwärtsrichtung 49. Der Bügelabschnitt 30 besitzt die Form eines geraden Rohrs. Der Bügelabschnitt 30 erstreckt sich ungefähr parallel zur Werkzeugebene E. Der Außenseitenabstand w1, w2 nimmt ausgehend vom Griffende 51 des Luftfilterbauteils 12 in Längsrichtung 50 bis zu dem Bügelabschnitt 30 hin, insbesondere bis zu dem Werkzeugende 52 des Luftfilterbauteils 12 hin, ab. Der Außenseitenabstand w1, w2 ist bezüglich der Längsrichtung 50 im Bereich des Bügelabschnitts 30 des Bügelgriffs 27, insbesondere im Bereich des Werkzeugendes 52 des Luftfilterbauteils 12, minimal. In Draufsicht von oben auf das in der Abstellposition befindliche Arbeitsgerät 1 in Richtung senkrecht zur Horizontalebene ist das Arbeitsgerät 1, insbesondere das Gehäuse 5 des Arbeitsgeräts 1, zumindest im Bereich des Luftfilterbauteils 12, insbesondere im Bereich der Filterlängserstreckung 70 keilförmig.

Die Außenseite der ersten Seitenfläche 21 besitzt einen Abstandsbereich. Der Abstandsbereich liegt im Bereich der Filterlängserstreckung 70, insbesondere in der vorderen Hälfte 71. Der Abstandsbereich liegt in Richtung senkrecht zur Werkzeugebene E unterhalb des Bügelabschnitts 30. Der Abstandsbereich liegt ausschließlich in Richtung senkrecht zur Werkzeugebene E unterhalb des Bügelabschnitts 30. Der Bügelgriff 27 weist im Bügelabschnitt 30 einen Bügelüberstand b über den Abstandsbereich auf. Der Bügelüberstand b ist ein Abstand des Bügelabschnitts 30 in Richtung senkrecht auf die Werkzeugebene E zur Außenseite der ersten Seitenfläche 21. Hierbei handelt es sich um einen geometrischen Abstand. Der Bügelüberstand gibt die kleinste in Richtung senkrecht zur Werkzeugebene E gemessene Entfernung zwischen Bügelabschnitt 30 und Abstandsbereich an. Der Bügelüberstand b ist der Abstand, den der Bügelabschnitt 30 in Richtung senkrecht auf die Werkzeugebene E zur ersten Seitenfläche 21, insbesondere zum Gehäuse 5 des Arbeitsgeräts 1, insbesondere zum Abstandsbereich aufweist. Der Bügelüberstand b wird auch als Bügelabstand bezeichnet.

Der Bügelgriff 27 weist im Bügelabschnitt 30 einen senkrecht zur Werkzeugebene E gemessenen Schwerpunktabstand s zu dem Masseschwerpunkt 40 des Arbeitsgeräts 1 auf. Dies ist ebenfalls in Fig. 4 dargestellt. Der Bügelüberstand b beträgt von 20% bis 60%, insbesondere von 30% bis 50%, im Ausführungsbeispiel von 35% bis 45% des Schwerpunktabstands s. Im Ausführungsbeispiel beträgt der Schwerpunktabstand s von 9 cm bis 15 cm, insbesondere von 11 cm bis 13 cm. In allen Ausführungsbeispielen weist der Bügelgriff 24 im gesamten Bügelabschnitt 30 denselben Schwerpunktabstand s auf. In den Ausführungsbeispielen weist der Bügelgriff 24 im gesamten Bügelabschnitt 30 denselben Bügelüberstand b auf.

Wie in Fig. 3 dargestellt, besitzt der Grundkörper 37, insbesondere das Grundgehäuse 38, insbesondere das Gehäuse 5 eine in Richtung senkrecht zur Längsrichtung 50 und in Richtung parallel zur Werkzeugebene E gemessene Gesamthöhe h. Die Gesamthöhe h ist in der Abstellposition senkrecht zur Horizontalebene gemessen. Das Arbeitsgerät 1 umfasst einen Bremshebel 43. Der Bremshebel 43 ist schwenkbar am Grundkörper 37, insbesondere am Gehäuse 5, insbesondere am Grundgehäuse 38 gelagert. Der Bremshebel 43 ist nicht Bestandteil, des Grundkörpers 37, insbesondere nicht des Gehäuses 5, insbesondere nicht des Grundgehäuses 38. Der Bügelgriff 27 ist nicht Bestandteil, des Grundkörpers 37, insbesondere nicht des Gehäuses 5, insbesondere nicht des Grundgehäuses 38. Der Bügelabschnitt 30 erstreckt sich in selber Richtung wie die Gesamthöhe h über eine Bügelabschnittslänge c. Die Bügelabschnittslänge c beträgt von 10% bis 60%, insbesondere von 20% bis 50%, insbesondere von 30% bis 40% der Gesamthöhe h. Der Bügelabschnitt 30 besitzt in der Abstellposition einen senkrecht zur Horizontalebene gemessenen Abstand zur Horizontaleben von mindestens 10% der Gesamthöhe h des Grundgehäuses 38. Der Bügelabschnitt 30 besitzt in der Abstellposition einen senkrecht zur Horizontalebene gemessenen Abstand zur Horizontaleben von höchstens 40% der Gesamthöhe h des Grundgehäuses 38.

Über mindestens 10%, insbesondere mindestens 20%, im Ausführungsbeispiel mindestens 25% der Gesamthöhe h weist der Bügelabschnitt 30 denselben Bügelabstand b, insbesondere denselben Schwerpunktabstand s auf.

Wie in Fig. 1 dargestellt, umfasst das Arbeitsgerät 1 einen Filterdeckel 13. In allen Ausführungsbeispielen bis auf in dem Ausführungsbeispiel nach Fig. 2a (und Fig. 4, wenn sie das Ausführungsbeispiel nach Fig. 2a betrifft) umfasst das Arbeitsgeräts 1 den Filterdeckel 13.

Im Ausführungsbeispiel nach Fig. 2a ist kein Filterdeckel 13 vorgesehen. Das Luftfilterbauteil 12 bildet im Ausführungsbeispiel nach Fig. 2a die erste Seitenfläche 21, insbesondere die Außenseite der ersten Seitenfläche 21. Die Kühlluft trifft von der Außenseite in Richtung quer, insbesondere in Richtung senkrecht zur Werkzeugebene E unmittelbar auf das Luftfilterbauteil 12. Das Luftfilterbauteil 12 ist Teil der Außenwand 10, insbesondere der Außenseite der Außenwand 10.

In den übrigen Ausführungsbeispielen ist der Filterdeckel 13 auf dem Grundkörper 37 des Arbeitsgeräts 1 angeordnet. Der Filterdeckel 13 ist getrennt von einem Grundkörper 37 des Arbeitsgeräts 1 ausgebildet. Der Filterdeckel 13 ist auf dem Grundkörper 37 befestigt. Der Filterdeckel 13 ist auf der Öffnung 41 des Grundgehäuses 38 des Grundkörpers 37 angeordnet. Der Filterdeckel 13 bedeckt die Öffnung 41 zumindest teilweise. Dies gilt für alle Ausführungsbeispiele bis auf Fig. 2a. In diesen Ausführungsbeispielen ist die Eintrittsöffnung 4 in dem Filterdeckel 13 ausgebildet. Es kann aber auch vorgesehen sein, dass die Eintrittsöffnung 4 im Grundgehäuse 38 des Arbeitsgeräts 1 ausgebildet ist. In den Ausführungsbeispielen (bis auf Fig. 2a) ist die untere Eintrittsöffnung 11 im Filterdeckel 13 ausgebildet. Es kann aber auch vorgesehen sein, dass die untere Eintrittsöffnung 11 in dem Grundgehäuse 38 des handgeführten Arbeitsgeräts 1 ausgebildet ist. Wie in den Figuren 3 und 4 und 11 und 12 dargestellt, ist der Eintrittsraum 24 durch den Filterdeckel 13 begrenzt. Der Filterdeckel 13 bildet einen Teil der ersten Seitenfläche 21, insbesondere der Außenseite der ersten Seitenfläche 21. Der Filterdeckel 13 bildet einen Teil der Außenwand 10.

In den Ausführungsbeispielen (bis auf Fig. 2a) ist das Luftfilterbauteil 12 zwischen dem Grundgehäuse 38 und dem Filterdeckel 13 angeordnet. Der Filterdeckel 13 dient zur Abdeckung der Öffnung 41 des Grundgehäuses 38. Der Filterdeckel 13 dient zur Führung der Kühlluft. Der Filterdeckel 13 dient zur Halterung des Luftfilterbauteils 12.

Wie beispielsweise in Fig. 2 dargestellt, ist der Filterdeckel 13 insbesondere durch ein einziges Befestigungselement 15 an dem Grundgehäuse 38 des Arbeitsgeräts 1 befestigbar. Der Filterdeckel 13 ist insbesondere durch ein einziges, zentrales Befestigungselement 15 an dem Grundgehäuse 38 befestigbar. Wie in Fig. 2 dargestellt, ist das Befestigungselement 15 in Seitenansicht auf das Arbeitsgerät 1 in Richtung senkrecht zur Werkzeugebene E in etwa in der Mitte des Filterdeckels 13 angeordnet. Das Befestigungselement 15 ist in dieser Seitenansicht in etwa im Bereich des Flächenschwerpunkts des Filterdeckels 13 angeordnet. Es kann auch vorgesehen sein, dass das Befestigungselement 15 genau im Flächenschwerpunkt des Filterdeckels 13 angeordnet ist. In den Ausführungsbeispielen (bis auf Fig. 2a) ist das Befestigungselement 15 eine Schraube. Das Befestigungselement kann aber auch in Form eines drehbaren Bajonettverschlusses oder in anderer, alternativer Weise gestaltet sein. Das Befestigungselement 15 kann durch den Filterdeckel 13 hindurch in den Grundkörper 37 geschraubt werden. Die Schraubrichtung verläuft in Richtung quer, insbesondere in Richtung senkrecht zur Werkzeugebene E.

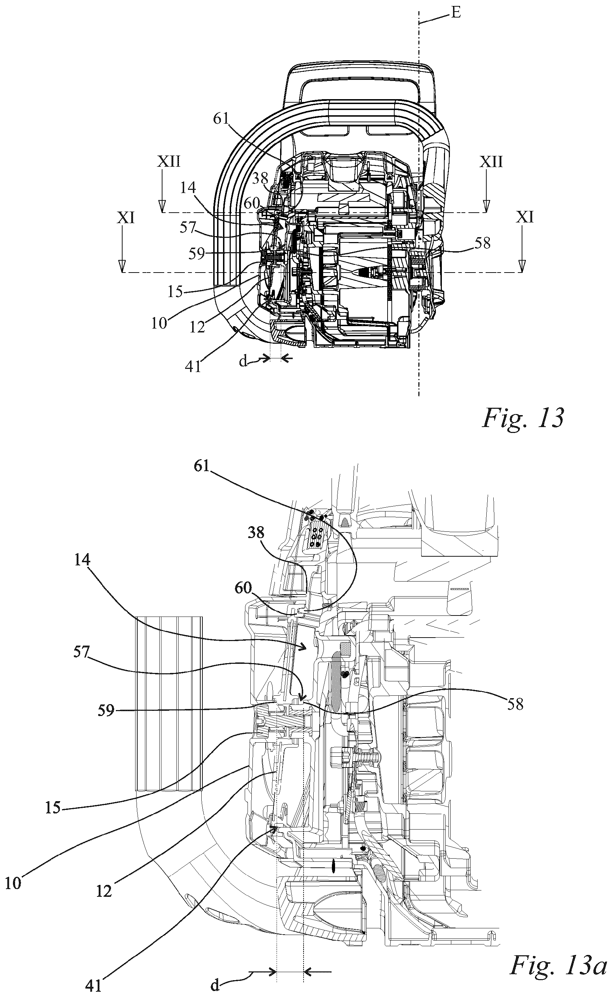

Das Luftfilterbauteil 12 ist (in allen Ausführungsbeispielen bis auf dem nach Fig. 2a) zwischen dem Filterdeckel 13 und dem Grundgehäuse 38 angeordnet. Das Luftfilterbauteil 12 ist mit Spiel zwischen dem Filterdeckel 13 und dem Grundkörper 37 des Arbeitsgeräts 1 gehalten. Das Befestigungselement 15 befestigt den Filterdeckel 13 derart am Grundkörper 37, das zwischen dem Filterdeckel 13 und dem Grundkörper 37 ein Halteraum 57 gebildet ist (Figuren 13 und 13a). Das Luftfilterbauteil 12 ist in dem Halteraum 57 gehalten. Das Spiel weist dem Luftfilterbauteil 12 in Richtung quer, insbesondere in Richtung senkrecht zur Längsrichtung 50 auf. Das Spiel weist das Luftfilterbauteil 12 in Richtung quer, insbesondere in Richtung senkrecht zur Werkzeugebene E auf.

Im Bereich des Befestigungselements 15 ist ein erster Anschlagbereich 58 für das Luftfilterbauteil 12 am Grundkörper 37 angeordnet. Im Bereich des Befestigungselements 15 ist ein zweiter Anschlagbereich 59 für das Luftfilterbauteil 12 am Filterdeckel 13 angeordnet. Das Luftfilterbauteil 12 ist mit Spiel in Richtung vom ersten Anschlagbereich 58 zum zweiten Anschlagbereich 59 zwischen dem ersten Anschlagbereich 58 und dem zweiten Anschlagbereich 59 gehalten. Zwischen dem ersten Anschlagbereich 58 und dem zweiten Anschlagbereich 59 ist der Halteraum 57 ausgebildet. Im Ausführungsbeispiel liegt der erste Anschlagbereich 58 dem zweiten Anschlagbereich 59 in Richtung quer, insbesondere in Richtung senkrecht zur Werkzeugebene E gegenüber. Das Luftfilterbauteil 12 ist mit Spiel bezüglich der Richtung quer, insbesondere senkrecht zur Werkzeugebene E zwischen dem ersten Anschlagbereich 58 und dem zweiten Anschlagbereich 59 gehalten. Der erste Anschlagbereich 58 und der zweite Anschlagbereich 59 sind in einem in Richtung quer, insbesondere senkrecht zur Werkzeugebene E gemessenen Abstand d zueinander angeordnet. Der Halteraum 57 besitzt eine Höhe, die ungefähr dem Abstand d entspricht. Das Luftfilterbauteil 12 erstreckt sich im Bereich des Befestigungselements 15 in Richtung quer, insbesondere in Richtung senkrecht zur Werkzeugebene E über mindestens 80%, im Ausführungsbeispiel über mindestens 90% des Abstands d. Das Luftfilterbauteil 12 erstreckt sich im Bereich des Befestigungselements 15 in Richtung quer, insbesondere in Richtung senkrecht zur Werkzeugebene E über höchsten 98%, im Ausführungsbeispiel über höchsten 95% des Abstands d.

Wie in Fig. 13 und in Fig. 13a dargestellt, liegt das Luftfilterbauteil 12 am Grundkörper 38 an (nicht im Ausführungsbeispiel nach Fig. 2a). Das Luftfilterbauteil 12 besitzt eine um die Richtung senkrecht zur Werkzeugebene E umlaufende Aufstecknut 60. Der Grundkörper 38 besitzt eine um die Richtung senkrecht zur Werkzeugebene E umlaufende Stirnwand 61. Die Stirnwand 61 besitzt eine Außen-, eine Innen- und eine Stirnseite. Die Aufstecknut 60 besitzt Nutseitenwände. Das Luftfilterbauteil 12 ist mit der Aufstecknut 60 auf die Stirnwand 61 aufgesteckt. Die Aufstecknut 60 umgreift die Stirnwand 61. Die Stirnwand 61 korrespondiert mit der Aufstecknut 60. Die Aufstecknut 60 liegt mit den Nutseitenwänden an der Außen- und der Innenseite der Stirnwand 61 an. Zwischen der Stirnseite der Stirnwand 61 und dem Nutgrund der Aufstecknut 60 besteht ein Abstand. Dadurch kann das Luftfilterbauteil 12 mit großer Fertigungstoleranz gefertigt werden. Dadurch kann der Filterdeckel 13 am Grundgehäuse 38 haubenartig lückenlos anliegen, da der Filterdeckel 13 problemlos gegen den Grundkörper 37 gedrückt werden kann. Hierbei können sich der Nutgrund und die Stirnseite weiter annähern, ohne dass sie sich berühren. Aufgrund der Anlage der Nutseitenwände an der Außen- und Innenseite der Stirnwand 61 ist das Luftfilterbauteil 12 luftdicht mit dem Grundkörper 37 verbunden. Zwischen der Stirnwand 61 und der Aufstecknut 60 existiert bezüglich der Richtung quer, insbesondere senkrecht zur Werkzeugebene E Spiel.

Der Eintrittsraum 24 ist an der ersten Seitenfläche 21 angeordnet (bis auf Fig. 2a). Die Eintrittsöffnung 4 ist in der ersten Seitenfläche 21 des Arbeitsgeräts 1 angeordnet. Der Filterdeckel 13 ist Bestandteil der ersten Seitenfläche 21 des Arbeitsgeräts 1. Wie in Fig. 4 dargestellt, ist der Filterdeckel 13 in der Abstellposition des Arbeitsgeräts 1 in Ansicht senkrecht auf Horizontalebene, insbesondere in Ansicht senkrecht auf den Boden 17, im Wesentlichen keilförmig.

In den Ausführungsbeispielen (bis auf Fig. 2a) ist der Eintrittsraum 24 zumindest teilweise von dem Filterdeckel 13 begrenzt. Der Eintrittsraum 24 ist zwischen dem Filterdeckel 13 und dem Luftfilterbauteil 12 ausgebildet. Der Filterdeckel 13 ist im Wesentlichen haubenförmig. An seinem dem hinteren Ende 3 des Arbeitsgeräts 1 zugewandten Ende weist der Filterdeckel 13 die Eintrittsöffnung 4 auf. An der der Öffnung 41 zugewandten Seite des Filterdeckels 13 besitzt der Filterdeckel 13 eine Anlagefläche zur Anlage am Grundgehäuse 38 des Grundkörpers 37 des handgeführten Arbeitsgeräts 1. Insbesondere liegt die Anlagefläche an dem Grundgehäuse 38 an. Die Anlagefläche des Filterdeckels 13 läuft vorteilhaft geschlossen um die Öffnung 41 um. Die Anlagefläche liegt dicht am Grundgehäuse 38 an. Die Eintrittsöffnung 4 durchdringt den Filterdeckel 13 vollständig. Die Eintrittsöffnung 4 ist allseitig durch Material des Filterdeckels 13 begrenzt.

Der Filterdeckel 13 begrenzt das Arbeitsgerät 1 nach außen hin. Der Filterdeckel 13 ist Bestandteil des Gehäuses 5. Der Filterdeckel 13 besitzt eine Decke, die einen Teil der außenliegenden ersten Seitenfläche 21 des Arbeitsgeräts 1 bildet. Die Decke begrenzt den Filterdeckel 13 in Richtung quer, insbesondere in Richtung senkrecht zur Werkzeugebene E. Die Decke ist frei von Öffnungen für den Eintritt von Kühlluft in das Arbeitsgerät 1. Der Filterdeckel 13 besitzt Seitenwände. Die Seitenwände und die Decke begrenzen den Eintrittsraum 24. Die Eintrittsöffnung 4 ist in einer Seitenwand des Filterdeckels 13 angeordnet. Die Decke des Filterdeckels 13 stützt sich über die Seitenwände an dem Grundgehäuse 38 ab.

Der Filterdeckel 13 weist in der Seitenansicht senkrecht auf die erste Seite 46 der Werkzeugebene E eine in Fig. 2 dargestellte Deckelaußenkontur 18 auf. In den Figuren 1 und 2 sind die Filteraußenkontur 28, die Filterfläche 29, die Deckelaußenkontur 18, eine Deckelfläche 19, der Eintrittsraum 24 und die Öffnung 41 schematisch mit derselben gestrichelten Linie eingezeichnet. Tatsächlich ist die Deckelaußenkontur 18 aber größer als die Filteraußenkontur 28. Die Deckelaußenkontur 18 schließt den Eintrittsraum 24 vollständig ein. Die Deckelaußenkontur 18 schließt die Öffnung 41 des Grundgehäuses 38 vollständig ein. Die Deckelaußenkontur 18 begrenzt bei Projektion der Deckelaußenkontur 18 in Richtung senkrecht zur Werkzeugebene E auf die Werkzeugebene E in der Werkzeugebene E eine gedachte Deckelfläche 19. Der Filterdeckel 13 ist in der Seitenansicht senkrecht auf die erste Seite 46 der Werkzeugebene E innerhalb der Deckelaußenkontur 18 über mindestens 85%, insbesondere über mindestens 90%, im Ausführungsbeispiel über mindestens 95% der Deckelfläche 19 frei von Öffnungen für den Eintritt von Kühlluft in das Arbeitsgerät 1. Eine gedachte Projektion des Filterdeckels 13 in Richtung senkrecht zur Werkzeugebene E auf die Werkzeugebene E ist innerhalb der in selber Weise auf die Werkzeugebene E projizierte Deckelaußenkontur 18 über mindestens 85%, insbesondere über mindestens 90%, im Ausführungsbeispiel über mindestens 95% der Deckelfläche 19 frei von Öffnungen für den Eintritt von Kühlluft in das Arbeitsgerät 1. Der Begriff Öffnung ist auch im Zusammenhang mit dem Filterdeckel 13 wie oben definiert zu verstehen. Hierbei geht es um den Anteil einer Durchdringungsöffnung, der in Ansicht senkrecht auf die erste Seite 46 der Werkzeugebene E sichtbar ist.

In allen Ausführungsbeispielen ist zur Energieversorgung des als Elektromotor ausgebildeten Motors 7 ein nicht dargestellter Akkupack vorgesehen. Bei dem handgeführten Arbeitsgerät 1 handelt es sich um ein akkubetriebenes Arbeitsgerät. Es kann auch vorgesehen sein, dass zur Energieversorgung eine Batterie, insbesondere eine austauschbare Batterie verwendet wird. Die nachfolgende Beschreibung zum Akkupack trifft auch auf eine Batterie zu. Wie beispielsweise in den Figuren 2 und 4 dargestellt, weist das Gehäuse 5, insbesondere das Grundgehäuse 38 einen Aufnahmeschacht 22 für den Akkupack auf. Der Aufnahmeschacht 22 besitzt eine Aufnahmeöffnung 23. Durch die Aufnahmeöffnung 23 ist der Akkupack in den Aufnahmeschacht 22 einschiebbar. Der Akkupack ist in einer Einschubrichtung 48 in den Aufnahmeschacht 22 einschiebbar.

Wie aus den Figuren 2 bis 4 ersichtlich, ist die erste Seitenfläche 21 frei von der Aufnahmeöffnung 23 des Aufnahmeschachts 22 für den Akkupack. Die Aufnahmeöffnung 23 des Aufnahmeschachts 22 für den Akkupack erstreckt sich ausschließlich in der Gehäusedecke 20 des Gehäuses 5, insbesondere des Grundgehäuses 38. Die Einschubrichtung 48 verläuft parallel zur Werkzeugebene E. Die Aufnahmeöffnung 23 läuft geschlossen um die Einschubrichtung 48 um. Die Aufnahmeöffnung 23 besitzt einen geschlossen um die Einschubrichtung 48 umlaufenden Rand. Beim Einschieben des Akkupacks in den Aufnahmeschacht 22 wird der Akkupack im Wesentlichen entgegen der Aufwärtsrichtung 49 nach unten durch die Aufnahmeöffnung 23 in den Aufnahmeschacht 22 eingeführt.

Der Aufnahmeschacht 22 ist bezüglich der Längsrichtung 50 im Bereich der Filterlängserstreckung 70, insbesondere im Bereich der hinteren Hälfte 72 der Filterlängserstreckung 70 angeordnet, wie beispielhaft für alle Ausführungsbeispiele in Fig. 4 dargestellt.

Eine gedachte Projektion des Luftfilterbauteils 12 in Richtung senkrecht zur Werkzeugebene E auf die Werkzeugebene E und eine gedachte Projektion des Aufnahmeschachts 22 in Richtung senkrecht zur Werkzeugebene E auf die Werkzeugebene E überlappen sich in der Werkzeugebene E. Wie in Fig. 2 beispielhaft für alle Ausführungsbeispiele dargestellt, besitzt der Aufnahmeschacht 22 in einer gedachten Projektion in Richtung senkrecht zur Werkzeugebene E auf die Werkzeugebene E eine Akkuaußenkontur 65. Die Akkuaußenkontur 65 begrenzt eine gedachte Akkufläche 66. Die Akkufläche 66 erstreckt sich in der Werkzeugebene E. In Fig. 2 ist die Akkufläche 66 mit gestrichelter Linie schematisch eingezeichnet. Die Filterfläche 29 und die Akkufläche 66 überlappen sich in der Werkzeugebene E.

Wie in Fig. 4 beispielhaft für alle Ausführungsbeispiele dargestellt, besitzt der Aufnahmeschacht 22 eine in Längsrichtung 50 gemessene Tiefe t1 und eine senkrecht zur Werkzeugebene E gemessene Breite t2. Die Breite t2 ist größer als die Tiefe t1. Der Grundkörper 37 besitzt eine in Richtung senkrecht zur Werkzeugebene E gemessenen maximalen Breite bm. Die Breite t2 des Aufnahmeschachts 22 beträgt mindestens 50%, insbesondere mindestens 60% der maximalen Breite bm des Grundkörpers 37 des Arbeitsgeräts 1. Der Grundkörper 37 des Arbeitsgeräts 1 weist die maximale Breite bm in der hinteren Hälfte 72 der Filterlängserstreckung 70 des Luftfilterbauteils 12 auf.

Der Aufnahmeschacht 22 ist im Bereich der hinteren Hälfte 72 der Filterlängserstreckung 70 angeordnet. Der Aufnahmeschacht 22 ist im Bereich der bezüglich der Längsrichtung 50 hinteren Hälfte des Eintrittsraums 24 angeordnet.

Die Lage des Masseschwerpunkts 40 des Arbeitsgeräts 1 ist mit eingelegtem Akku bestimmt. Die Lage des Masseschwerpunkts 40 des Arbeitsgeräts 1 ist mit in den Akkuschacht 22 eingeschobenem Akku bestimmt.

Die Kühlluft wird von einem in den Figuren nicht dargestellten Gebläse des Arbeitsgeräts 1 in das Arbeitsgerät 1 angesaugt und entlang des Strömungspfads 26 geführt. Der Strömungspfad 26 ist in den Figuren 1, 3 und 4 schematisch gestrichelt eingezeichnet. Die Kühlluft tritt durch die Eintrittsöffnung 4 in das Arbeitsgerät 1 ein (bei allen Ausführungsbeispielen außer dem nach Fig. 2a). Beim Ausführungsbeispiel nach Fig. 2a (und Fig. 4, wenn sie auf Fig. 2a bezogen ist) tritt die Kühlluft initial durch das Luftfilterbauteil 12 in das Arbeitsgerät 1 ein. Anschließend gelangt die Kühlluft durch die seitliche Eintrittsöffnung 62 in den Reinluftbereich 14.

Bei den übrigen Ausführungsbeispielen (bis auf Fig. 2a) durchströmt die Kühlluft die Eintrittsöffnung 4 in Richtung der Längsrichtung 50. Durch die Eintrittsöffnung 4 tritt die Kühlluft unmittelbar in den Eintrittsraum 24 ein, der durch den Filterdeckel 13 und das Luftfilterbauteil 12 gebildet ist. Im Eintrittsraum 24 strömt die Kühlluft entlang des Luftfilterbauteils 12, insbesondere entlang der Filterfläche, in Richtung vom hinteren Ende 3 hin zum vorderen Ende 2. Hierbei tritt Kühlluft durch das Luftfilterbauteil 12 hindurch und durch die Öffnung 41 im Grundgehäuse 38 des Grundkörpers 37 in den Reinluftraum 14 ein. Beim Entlangströmen entlang des Luftfilterbauteils 12 nimmt das Volumen der Kühlluft im Eintrittsraum 24 entlang der Längsrichtung 50 ab, da immer mehr Kühlluft durch das Luftfilterbauteil 12 aus dem Eintrittsraum 24 in den Reinluftraum 14 austritt. Im selben Maß nimmt auch die Fläche der Strömungsquerschnitte 31, 32 in Längsrichtung 50 ab. Dadurch kann der Volumenstrom im Eintrittsraum 24 im Wesentlichen konstant gehalten werden. Dies sorgt für günstige Strömungsverhältnisse. Die Kühlluft kann sich gleichmäßig über das Luftfilterbauteil 12, insbesondere über die Filterfläche verteilen und über die gesamte Fläche des Luftfilterbauteils 12 mit einem ähnlichen Volumenstrom in den Reinluftraum 14 vordringen. Hierbei strömt die Kühlluft in Richtung quer zur Werkzeugebene E in den Reinluftraum 14. Hierbei strömt die Kühlluft in Richtung quer zur Längsrichtung 50 in den Reinluftraum 14. Im Reinluftraum 14 und im Innenraum 39 strömt die Kühlluft dann entlang des Strömungspfads 26 in Aufwärtsrichtung 49 zur Elektronik des als Elektromotor ausgebildeten Motors 7. Hierbei wird die Elektronik des Elektromotors gekühlt. Dann strömt die Kühlluft entgegen der Aufwärtsrichtung 49 zum als Elektromotor ausgebildeten Motor 7. Die Kühlluft verlässt das Arbeitsgerät 1 durch eine Öffnung im Boden 17.

Aufgrund der keilförmigen Gestaltung des Grundkörpers 37 kann der Bügelgriff 27, insbesondere der Bügelabschnitt 30 des Bügelgriffs 27 bauraumsparend und in kleinem Abstand zum Masseschwerpunkt 40 des Arbeitsgeräts 1 angeordnet werden. Dadurch sind die Hebel und Schwenkkräfte zur Führung und Bedienung des Arbeitsgeräts 1 mittels des Bügelgriffs 27 klein.

## Patentansprüche

1. Handgeführtes Arbeitsgerät mit einem Werkzeug (6) und einem Bediengriff (34), wobei das Arbeitsgerät (1) einen Motor (7) zum Antrieb des Werkzeugs (6) umfasst, wobei eine Längsrichtung (50) in Richtung von dem Bediengriff (34) zu dem Werkzeug (6) verläuft, wobei das Werkzeug (6) eine Werkzeugebene (E) besitzt, wobei das Arbeitsgerät (1) ein Luftfilterbauteil (12) zur Filterung von Kühlluft zur Kühlung des Motors (7) umfasst, wobei das Arbeitsgerät (1) in einer Abstellposition auf einer Horizontalebene abgestellt werden kann, wobei das Arbeitsgerät (1) einen Boden (17) besitzt, der in der Abstellposition der Horizontalebene zugewandt ist, wobei das Arbeitsgerät (1) eine dem Boden (17) gegenüberliegende Gehäusedecke (20) aufweist, wobei das Arbeitsgerät (1) eine Seitenfläche (21) aufweist, die die Gehäusedecke (20) und den Boden (17) miteinander verbindet und das Arbeitsgerät (1) entlang der Längsrichtung (50) in Richtung senkrecht zur Werkzeugebene (E) begrenzt, wobei das Luftfilterbauteil (12) an der Seitenfläche (21) des Arbeitsgeräts (1) angeordnet ist, wobei das Luftfilterbauteil (12) in Längsrichtung (50) eine Filterlängserstreckung (70) aufweist, wobei eine in der Abstellposition senkrecht zur Horizontalebene verlaufende, gedachte Tangentialebene (T) die Seitenfläche (21) im Bereich der Filterlängserstreckung (70) lediglich tangiert,
**dadurch gekennzeichnet, dass** die Tangentialebene (T) die Werkzeugebene (E) schneidet, wobei die Filterlängserstreckung (70) bezüglich der Längsrichtung (50) eine vordere Hälfte (71) und eine hintere Hälfte (72) aufweist, wobei die vordere Hälfte (71) bezüglich der Längsrichtung (50) vor der hinteren Hälfte (72) angeordnet ist,wobei die Tangentialebene (T) die Seitenfläche (21) des Arbeitsgeräts (1) im Bereich der hinteren Hälfte (72) der Filterlängserstreckung (70) des Luftfilterbauteils (12) tangiert, wobei die Tangentialebene (T) die Werkzeugebene (E) bezüglich der Längsrichtung (50) vor dem Bereich der Filterlängserstreckung (70) schneidet,
- wobei das Arbeitsgerät (1) einen bezüglich der Längsrichtung (50) im Bereich der Filterlängserstreckung (70) angeordneten Aufnahmeschacht (22) für einen in einer Einschubrichtung (48) durch eine Aufnahmeöffnung (23) des Aufnahmeschachts (22) in den Aufnahmeschacht (22) einschiebbaren Akkupack aufweist oder
- wobei das Arbeitsgerät (1) einen Bügelgriff (27) mit einem Bügelabschnitt (30), der im Bereich der Filterlängserstreckung (70) und in Richtung senkrecht zur Werkzeugebene (E) über der Seitenfläche (21) liegt, umfasst.

2. Handgeführtes Arbeitsgerät nach Anspruch 1,
**dadurch gekennzeichnet, dass** die Tangentialebene (T) mit der Werkzeugebene (E) einen Winkel (α) von mindestens 1°, insbesondere von mindestens 3° einschließt und/oder dass die Tangentialebene (T) mit der Werkzeugebene (E) einen Winkel (α) von höchstens 45°, insbesondere von höchstens 20° einschließt.

3. Handgeführtes Arbeitsgerät nach Anspruch 1 oder 2,
**dadurch gekennzeichnet, dass** ein senkrecht zur Werkzeugebene (E) gemessener Außenseitenabstand (w1, w2) der Außenseite der Seitenfläche (21) zu der Werkzeugebene (E) im Bereich der Filterlängserstreckung (70) des Luftfilterbauteils (12) in Längsrichtung (50) abnimmt, insbesondere im Wesentlichen kontinuierlich abnimmt.

4. Handgeführtes Arbeitsgerät nach Anspruch 3,
**dadurch gekennzeichnet, dass** der Außenseitenabstand (w1, w2) bezüglich der Längsrichtung (50) im Bereich des Bügelabschnitts (30) des Bügelgriffs (24) minimal ist.

5. Handgeführtes Arbeitsgerät nach Anspruch 4,
**dadurch gekennzeichnet, dass** die Außenseite der Seitenfläche (21) einen Abstandsbereich besitzt, der in Richtung senkrecht zur Werkzeugebene (E) unterhalb des Bügelabschnitts (30) liegt, dass der Bügelgriff (24) im Bügelabschnitt (30) einen senkrecht zur Werkzeugebene (E) gemessenen Bügelüberstand (b) über den Abstandsbereich aufweist, dass der Bügelgriff (24) im Bügelabschnitt (30) einen senkrecht zur Werkzeugebene (E) gemessenen Schwerpunktsabstand (s) zu dem Masseschwerpunkt (40) des Arbeitsgeräts (1) aufweist, und dass der Bügelüberstand (b) von 20% bis 60%, insbesondere von 30% bis 50%, bevorzugt von 35% bis 45% des Schwerpunktsabstands (s) beträgt, insbesondere dass der Schwerpunktsabstand (s) von 9 cm bis 15 cm, insbesondere von 11 cm bis 13 cm, beträgt.

6. Handgeführtes Arbeitsgerät nach einem der Ansprüche 1 bis 5,
**dadurch gekennzeichnet, dass** das Arbeitsgerät (1) einen Eintrittsraum (24) zum Eintritt von durch das Luftfilterbauteil (12) zu filternder Kühlluft in das Arbeitsgerät (1) umfasst, dass der Eintrittsraum (24) durch die Seitenfläche (21) begrenzt ist, dass der Eintrittsraum (24) eine Eintrittsöffnung (4) besitzt, durch die Kühlluft von außen in Längsrichtung (50) in den Eintrittsraum (24) strömen kann, und insbesondere dass der Eintrittsraum (24) von dem Luftfilterbauteil (12) begrenzt ist.

7. Handgeführtes Arbeitsgerät nach Anspruch 6,
**dadurch gekennzeichnet, dass** das Arbeitsgerät (1) einen Filterdeckel (13) aufweist, und dass der Eintrittsraum (24) durch den Filterdeckel (13) begrenzt ist, insbesondere dass die Eintrittsöffnung (4) in dem Filterdeckel (13) ausgebildet ist, und insbesondere dass der Filterdeckel (13) einen Teil der Seitenfläche (21) bildet.

8. Handgeführtes Arbeitsgerät nach Anspruch 7,
**dadurch gekennzeichnet, dass** der Filterdeckel (13) in Ansicht senkrecht auf die Horizontalebene in der Abstellposition im Wesentlichen keilförmig ist.

9. Handgeführtes Arbeitsgerät nach Anspruch 7 oder 8,
**dadurch gekennzeichnet, dass** der Filterdeckel (13) und/oder das Luftfilterbauteil (12) durch ein einziges, insbesondere zentrales, Befestigungselement (15) an dem Grundkörper (37) befestigbar ist.

10. Handgeführtes Arbeitsgerät nach einem der Ansprüche 1 bis 9,
**dadurch gekennzeichnet, dass** der Aufnahmeschacht (22) bezüglich der Längsrichtung (50) im Bereich der hinteren Hälfte (72) der Filterlängserstreckung (70) angeordnet ist, und insbesondere dass sich eine gedachte Projektion des Luftfilterbauteils (12) in Richtung senkrecht zur Werkzeugebene (E) auf die Werkzeugebene (E) und eine gedachte Projektion des Aufnahmeschachts (22) in Richtung senkrecht zur Werkzeugebene (E) auf die Werkzeugebene (E) in der Werkzeugebene (E) überlappen.

11. Handgeführtes Arbeitsgerät nach einem der Ansprüche 1 bis 10,
**dadurch gekennzeichnet, dass** der Aufnahmeschacht (22) eine in Längsrichtung (50) gemessene Tiefe (t1) und eine senkrecht zur Werkzeugebene (E) gemessene Breite (t2) besitzt, und dass die Breite (t2) größer als die Tiefe (t1) ist, insbesondere dass die Breite (t2) mindestens 50% einer in Richtung senkrecht zur Werkzeugebene (E) gemessenen maximalen Breite (bm) des Grundkörpers (37) des Arbeitsgeräts (1) beträgt.

12. Handgeführtes Arbeitsgerät mit einem Werkzeug (6) und einem Bediengriff (34), wobei das Arbeitsgerät (1) einen Motor (7) zum Antrieb des Werkzeugs (6) umfasst, wobei eine Längsrichtung (50) in Richtung von dem Bediengriff (34) zu dem Werkzeug (6) verläuft, wobei das Arbeitsgerät (1) ein Luftfilterbauteil (12) und einen Eintrittsraum (24) zum Eintritt von durch das Luftfilterbauteil (12) zu filternder Kühlluft in das Arbeitsgerät (1) umfasst, wobei der Eintrittsraum (24) mindestens eine Eintrittsöffnung (4) zum Eintritt der Kühlluft von außen in das Arbeitsgerät (1) aufweist, wobei das Luftfilterbauteil (12) den Eintrittsraum (24) begrenzt, wobei der Eintrittsraum (24) einen Abschnitt (25) eines Strömungspfads (26) für Kühlluft begrenzt, wobei der Strömungspfad (26) ausgehend von der Eintrittsöffnung (4) zu dem Motor (7) führt, und wobei der Eintrittsraum (24) entlang des Strömungspfads (26) senkrecht zur Längsrichtung (50) verlaufende Strömungsquerschnitte (31, 32) für die Kühlluft besitzt, **dadurch gekennzeichnet, dass** die Eintrittsöffnung (4) so angeordnet ist, dass Kühlluft in Längsrichtung (50) durch die Eintrittsöffnung (4) strömen kann, dass das Luftfilterbauteil (12) die Strömungsquerschnitte (31, 32) begrenzt, und dass die Strömungsquerschnitte (31, 32) in Längsrichtung (50) des Arbeitsgeräts (1) kleiner, insbesondere kontinuierlich kleiner, werden.

13. Handgeführtes Arbeitsgerät nach Anspruch 12,
**dadurch gekennzeichnet, dass** die Kühlluft im Eintrittsraum (24) entlang einer Filterfläche des Luftfilterbauteils (12) strömt, insbesondere dass die Kühlluft durch das Luftfilterbauteil (12) während des Entlangströmens entlang der Filterfläche nach und nach in einen Reinluftraum (14) des Arbeitsgeräts (1) eintritt, und insbesondere dass der Eintrittsraum (24) zumindest an einer Seite von einer Außenwand (10) des Arbeitsgeräts (1) begrenzt ist, insbesondere dass die Strömungsquerschnitte (31, 32) von der Außenwand (10) des Arbeitsgeräts (1) begrenzt sind.

14. Handgeführtes Arbeitsgerät nach Anspruch 12 oder 13,
**dadurch gekennzeichnet, dass** das Arbeitsgerät (1) einen Boden (17) besitzt, der in der Abstellposition der Horizontalebene zugewandt ist, dass das Arbeitsgerät (1) eine dem Boden (17) gegenüberliegende Gehäusedecke (20) aufweist, dass das Arbeitsgerät (1) eine Seitenfläche (21) aufweist, die die Gehäusedecke (20) und den Boden (17) miteinander verbindet und das Arbeitsgerät (1) entlang der Längsrichtung (50) in Richtung senkrecht zur Werkzeugebene (E) begrenzt, und dass der Eintrittsraum (24), insbesondere die Eintrittsöffnung (4), an der Seitenfläche (21) des Arbeitsgeräts (1) angeordnet ist.

## Claims

1. Hand-held implement having a tool (6) and having an operating handle (34), wherein the implement (1) comprises a motor (7) for driving the tool (6), wherein a longitudinal direction (50) extends in the direction from the operating handle (34) to the tool (6), wherein the tool (6) has a tool plane (E), wherein the implement (1) comprises an air-filter component (12) for filtering cooling air for cooling the motor (7), wherein the implement (1) can be set down in a set-down position on a horizontal plane, wherein the implement (1) has a base (17) which, in the set-down position, faces towards the horizontal plane, wherein the implement (1) has a housing cover (20) which is situated opposite the base (17), wherein the implement (1) has a side surface (21) which connects the housing cover (20) and the base (17) to one another and which delimits the implement (1) in a direction perpendicular to the tool plane (E) along the longitudinal direction (50), wherein the air-filter component (12) is arranged on the side surface (21) of the implement (1), wherein the air-filter component (12) has a filter longitudinal extent (70) in the longitudinal direction (50), wherein an imaginary tangential plane (T) which, in the set-down position, extends perpendicularly to the horizontal plane is tangential to the side surface (21) in the region of the filter longitudinal extent (70) only,
**characterized in that** the tangent plane (T) intersects the tool plane (E), wherein the filter longitudinal extent (70) has a front half (71) and a rear half (72) in relation to the longitudinal direction (50), wherein the front half (71) is arranged in front of the rear half (72) in relation to the longitudinal direction (50), wherein the tangential plane (T) is tangential to the side surface (21) of the implement (12) in the region of the rear half (72) of the filter longitudinal extent (70) of the air-filter component (1), wherein the tangential plane (T) intersects the tool plane (E) in front of the region of the filter longitudinal extent (70) in relation to the longitudinal direction (50),
- wherein the implement (1) has a receiving well (22) for a rechargeable-battery pack able to be pushed into the receiving well (22) through a receiving opening (23) of the receiving well (22) in a push-in direction (48), which receiving well is arranged in the region of the filter longitudinal extent (70) in relation to the longitudinal direction (50), or
- wherein the implement (1) comprises a bow handle (27) with a bow portion (30) which is situated in the region of the filter longitudinal extent (70) and above the side surface (21) in the direction perpendicular to the tool plane (E).

2. Hand-held implement according to Claim 1,
**characterized in that** the tangent plane (T) includes an angle (α) of at least 1°, in particular of at least 3°, with the tool plane (E), and/or **in that** the tangent plane (T) includes an angle (α) of at most 45°, in particular of at most 20°, with the tool plane (E).

3. Hand-held implement according to Claim 1 or 2,
**characterized in that** an outer-side spacing (w1, w2), measured perpendicularly to the tool plane (E), of the outer side of the side surface (21) to the tool plane (E) in the region of the filter longitudinal extent (70) of the air-filter component (12) decreases, in particular decreases substantially continuously, in the longitudinal direction (50).

4. Hand-held implement according to Claim 3,
**characterized in that** the outer-side spacing (w1, w2) is minimal in the region of the bow portion (30) of the bow handle (27) in relation to the longitudinal direction (50).

5. Hand-held implement according to Claim 4,
**characterized in that** the outer side of the side surface (21) has a spacing region which is situated below the bow portion (30) in the direction perpendicular to the tool plane (E), **in that**, in the bow portion (30), the bow handle (27) has a bow projection (b), measured perpendicularly to the tool plane (E), over the spacing region, **in that**, in the bow portion (30), the bow handle (27) has a centre-of-mass spacing (s), measured perpendicularly to the tool plane (E), to the centre of mass (40) of the implement (1), and **in that** the bow projection (b) is from 20% to 60%, in particular from 30% to 50%, preferably from 35% to 45%, of the centre-of-mass spacing (s), in particular **in that** centre-of-mass spacing (s) is from 9 cm to 15 cm, in particular from 11 cm to 13 cm.

6. Hand-held implement according to one of Claims 1 to 5,
**characterized in that** the implement (1) comprises an entry space (24) for entry into the implement (1) of cooling air to be filtered by the air-filter component (12), **in that** the entry space (24) is delimited by the side surface (21), **in that** the entry space (24) has an entry opening (4) through which cooling air can flow from the outside into the entry space (24) in the longitudinal direction (50), and in particular **in that** the entry space (24) is delimited by the air-filter component (12).

7. Hand-held implement according to Claim 6,
**characterized in that** the implement (1) has a filter cover (13), and **in that** the entry space (24) is delimited by the filter cover (13), in particular **in that** the entry opening (4) is formed in the filter cover (13), and in particular **in that** the filter cover (13) forms a part of the side surface (21).

8. Hand-held implement according to Claim 7,
**characterized in that** the filter cover (13) is substantially wedge-shaped in the set-down position in a view perpendicular to the horizontal plane.

9. Hand-held implement according to Claim 7 or 8,
**characterized in that** the filter cover (13) and/or the air-filter component (12) are/is fastenable to the main body (37) by a single, in particular central, fastening element (15).

10. Hand-held implement according to one of Claims 1 to 9,
**characterized in that** the receiving well (22) is arranged in the region of the rear half (72) of the filter longitudinal extent (70) in relation to the longitudinal direction (50), and in particular **in that** an imaginary projection of the air-filter component (12) onto the tool plane (E) in a direction perpendicular to the tool plane (E) and an imaginary projection of the receiving well (22) onto the tool plane (E) in a direction perpendicular to the tool plane (E) overlap in the tool plane (E).

11. Hand-held implement according to one of Claims 1 to 10,
**characterized in that** the receiving well (22) has a depth (t1) measured in the longitudinal direction (50) and has a width (t2) measured perpendicularly to the tool plane (E), and **in that** the width (t2) is greater than the depth (t1), in particular **in that** the width (t2) is at least 50% of a maximum width (bm), measured in a direction perpendicular to the tool plane (E), of the main body (37) of the implement (1).

12. Hand-held implement having a tool (6) and having an operating handle (34), wherein the implement (1) comprises a motor (7) for driving the tool (6), wherein a longitudinal direction (50) extends in the direction from the operating handle (34) to the tool (6), wherein the implement (1) comprises an air-filter component (12) and an entry space (24) for entry into the implement (1) of cooling air to be filtered by the air-filter component (12), wherein the entry space (24) has at least one entry opening (4) for entry of cooling air from the outside into the implement (1), wherein the air-filter component (12) delimits the entry space (24), wherein the entry space (24) delimits a portion (25) of a flow path (26) for cooling air, wherein the flow path (26) leads from the entry opening (4) to the motor (7), and wherein, along the flow path (26), the entry space (24) has flow cross sections (31, 32) for the cooling air that extend perpendicularly to the longitudinal direction (50),
**characterized in that** the entry opening (4) is arranged in such a way that cooling air can flow through the entry opening (4) in the longitudinal direction (50), **in that** the air-filter component (12) delimits the flow cross-sections (31, 32), and **in that** the flow cross-sections (31, 32) become smaller, in particular become smaller continuously, in the longitudinal direction (50) of the implement (1).

13. Hand-held implement according to Claim 12,
**characterized in that** the cooling air flows in the entry space (24) along a filter surface of the air-filter component (12), in particular **in that** the cooling air gradually enters a clean-air space (14) of the implement (1) through the air-filter component (12) while flowing along the filter surface, and in particular **in that** the entry space (24) is delimited at least on one side by an outer wall (10) of the implement (1), in particular **in that** the flow cross sections (31, 32) are delimited by the outer wall (10) of the implement (1).

14. Hand-held implement according to Claim 12 or 13,
**characterized in that** the implement (1) has a base (17) which, in the set-down position, faces towards the horizontal plane, **in that** the implement (1) has a housing cover (20) which is situated opposite the base (17), **in that** the implement (1) has a side surface (21) which connects the housing cover (20) and the base (17) to one another and which delimits the implement (1) in a direction perpendicular to the tool plane (E) along the longitudinal direction (50), and **in that** the entry space (24), in particular the entry opening (4), is arranged on the side surface (21) of the implement (1).

## Revendications

1. Appareil de travail portatif avec un outil (6) et une poignée de commande (34), l'appareil de travail (1) comprenant un moteur (7) pour entraîner l'outil (6), un sens longitudinal (50) s'étendant dans le sens allant de la poignée de commande (34) à l'outil (6), l'outil (6) possédant un plan (E) d'outil, l'appareil de travail (1) comprenant un composant de filtre à air (12) pour filtrer l'air de refroidissement pour refroidir le moteur (7), l'appareil de travail (1) pouvant être déposé sur un plan horizontal dans une position de dépose, l'appareil de travail (1) possédant un fond (17) qui est tourné vers le plan horizontal dans la position de dépose, l'appareil de travail (1) comportant un couvercle de boîtier (20) opposé au fond (17), l'appareil de travail (1) comportant une surface latérale (21), qui relie le couvercle de boîtier (20) et le fond (17) l'un à l'autre et qui délimite l'appareil de travail (1) le long du sens longitudinal (50) dans une direction perpendiculaire au plan (E) d'outil, le composant de filtre à air (12) étant disposé sur la surface latérale (21) de l'appareil de travail (1), le composant de filtre à air (12) présentant une extension longitudinale de filtre (70) dans le sens longitudinal (50), un plan tangentiel imaginaire (T) s'étendant perpendiculairement au plan horizontal dans la position de dépose étant tangent à la surface latérale (21) dans la zone de l'extension longitudinale de filtre (70),
**caractérisé en ce que** le plan tangentiel (T) coupe le plan (E) d'outil, l'extension longitudinale de filtre (70) comportant une moitié avant (71) et une moitié arrière (72) par rapport à la direction longitudinale (50), la moitié avant (71) étant disposée devant la moitié arrière (72) par rapport au sens longitudinal (50), le plan tangentiel (T) étant tangent à la surface latérale (21) de l'appareil de travail (1) dans la zone de la moitié arrière (72) de l'extension longitudinale de filtre (70) du composant de filtre à air (12), le plan tangentiel (T) coupant le plan (E) d'outil devant la zone de l'extension longitudinale de filtre (70) par rapport au sens longitudinal (50),
- l'appareil de travail (1) comportant un puits de réception (22) disposé dans la zone de l'extension longitudinale de filtre (70) par rapport au sens longitudinal (50), pour un bloc-batterie pouvant être inséré dans le puits de réception (22) par une ouverture de réception (23) du puits de réception (22) dans une direction d'insertion (48) ou
- l'appareil de travail (1) comprenant une poignée en forme d'étrier (27) avec une section en forme d'étrier (30) qui se trouve au-dessus de la surface latérale (21) dans la zone de l'extension longitudinale de filtre (70) et dans une direction perpendiculaire au plan (E) d'outil.

2. Appareil de travail portatif selon la revendication 1,
**caractérisé en ce que** le plan tangentiel (T) forme avec le plan (E) d'outil un angle (α) d'au moins 1°, en particulier d'au moins 3°, et/ou que le plan tangentiel (T) forme avec le plan (E) d'outil un angle (α) de 45° au maximum, en particulier de 20° au maximum.

3. Appareil de travail portatif selon la revendication 1 ou la revendication 2, **caractérisé en ce qu'**une distance latérale extérieure (w1, w2), mesurée perpendiculairement au plan (E) d'outil, entre le côté extérieur de la surface latérale (21) et le plan (E) d'outil diminue, en particulier diminue sensiblement en continu, dans le sens longitudinal (50) dans la zone de l'extension longitudinale de filtre (70) du composant de filtre à air (12).

4. Appareil de travail portatif selon la revendication 3,
**caractérisé en ce que** la distance latérale extérieure (w1, w2) par rapport au sens longitudinal (50) est minimale dans la zone de l'étrier à partir de la section (30) de la poignée en étrier (27).

5. Appareil de travail portatif selon la revendication 4,
**caractérisé en ce que** le côté extérieur de la surface latérale (21) possède une zone d'espacement, qui se situe au-dessous de la section d'étrier (30) dans la direction perpendiculaire au plan (E) d'outil, que la poignée en étrier (27) comporte dans la section d'étrier (30) un débord en étrier (b) mesuré perpendiculairement au plan (E) d'outil au-delà de la zone d'espacement, que la poignée en étrier (27) dans la section d'étrier (30) présente une distance de centre de gravité (s), mesurée perpendiculairement au plan (E) d'outil, par rapport au centre de gravité (40) de l'appareil de travail (1), et que le débord en étrier (b) va de 20 % à 60 %, en particulier de 30 % à 50 %, de manière préférée de 35 % à 45 %, de la distance de centre de gravité (s), en particulier que la distance de centre de gravité (s) va de 9 cm à 15 cm, en particulier de 11 cm à 13 cm.

6. Appareil de travail portatif selon l'une des revendications 1 à 5,
**caractérisé en ce que** l'appareil de travail (1) comprend un espace d'entrée (24) pour l'entrée d'air de refroidissement à filtrer par le composant de filtre à air (12) dans l'appareil de travail (1), que l'espace d'entrée (24) est délimité par la surface latérale (21), que l'espace d'entrée (24) possède une ouverture d'entrée (4) par laquelle de l'air de refroidissement peut s'écouler depuis l'extérieur dans le sens longitudinal (50) dans l'espace d'entrée (24), et en particulier que l'espace d'entrée (24) est délimité par le composant de filtre à air (12).

7. Appareil de travail portatif selon la revendication 6,
**caractérisé en ce que** l'appareil de travail (1) présente un couvercle de filtre (13), et que l'espace d'entrée (24) est délimité par le couvercle de filtre (13), en particulier que l'ouverture d'entrée (4) est formée dans le couvercle de filtre (13), et en particulier que le couvercle de filtre (13) forme une partie de la surface latérale (21).

8. Appareil de travail portatif selon la revendication 7,
**caractérisé en ce que** le couvercle de filtre (13) est sensiblement en forme de coin dans la position de dépose, vu perpendiculairement au plan horizontal.

9. Appareil de travail portatif selon la revendication 7 ou la revendication 8, **caractérisé en ce que** le couvercle de filtre (13) et/ou le composant de filtre à air (12) peuvent être fixés sur le corps de base (37) par un seul élément de fixation (15), en particulier central.

10. Appareil de travail portatif selon l'une des revendications 1 à 9, **caractérisé en ce que** le puits de réception (22) est disposé dans la zone de la moitié arrière (72) de l'extension longitudinale de filtre (70) par rapport au sens longitudinal (50), et en particulier qu'une projection imaginaire du composant de filtre à air (12) par rapport au plan (E) d'outil dans la direction perpendiculaire au plan (E) d'outil et une projection imaginaire du puits de réception (22) par rapport au plan (E) d'outil dans la direction perpendiculaire au plan (E) d'outil se chevauchent dans le plan (E) d'outil.

11. Appareil de travail portatif selon l'une des revendications 1 à 10, **caractérisé en ce que** le puits de réception (22) possède une profondeur (t1) mesurée dans le sens longitudinal (50) et une largeur (t2) mesurée perpendiculairement au plan (E) d'outil, et que la largeur (t2) est supérieure à la profondeur (t1), en particulier **en ce que** la largeur (t2) est d'au moins 50 % d'une largeur maximale (bm), mesurée dans la direction perpendiculaire au plan (E) d'outil, du corps principal (37) de l'appareil de travail (1).

12. Appareil à main portatif avec un outil (6) et une poignée de commande (34), l'appareil de travail (1) comprenant un moteur (7) pour entraîner l'outil (6), un sens longitudinal (50) s'étendant dans la direction depuis la poignée de commande (34) à l'outil (6), l'appareil de travail (1) comprenant un composant de filtre à air (12) et un espace d'entrée (24) pour l'entrée de l'air de refroidissement à filtrer par le composant de filtre à air (12) dans l'appareil de travail (1), l'espace d'entrée (24) comportant au moins une ouverture d'entrée (4) pour l'entrée de l'air de refroidissement depuis l'extérieur dans l'appareil de travail (1), le composant de filtre à air (12) délimitant l'espace d'entrée (24), l'espace d'entrée (24) délimitant une section (25) d'un trajet d'écoulement (26) pour l'air de refroidissement, le trajet d'écoulement (26) menant de l'ouverture d'entrée (4) au moteur (7), et l'espace d'entrée (24) possédant des sections transversales d'écoulement (31, 32) pour l'air de refroidissement s'étendant perpendiculairement au sens longitudinal (50) le long du trajet d'écoulement (26),
**caractérisé en ce que** l'ouverture d'entrée (4) est disposée de telle sorte que de l'air de refroidissement peut s'écouler dans le sens longitudinal (50) à travers l'ouverture d'entrée (4), que le composant de filtre à air (12) délimite les sections transversales d'écoulement (31, 32), et que les sections transversales d'écoulement (31, 32) dans le sens longitudinal (50) de l'appareil de travail (1) diminuent, en particulier en continu.

13. Appareil de travail portatif selon la revendication 12,
**caractérisé en ce que** l'air de refroidissement s'écoule dans l'espace d'entrée (24) le long d'une surface filtrante du composant de filtre à air (12), en particulier que l'air de refroidissement entre au fur et à mesure dans un espace d'air propre (14) de l'appareil de travail (1) à travers le composant de filtre à air (12) pendant son écoulement le long de la surface filtrante, et en particulier que l'espace d'entrée (24) est délimité au moins sur un côté par une paroi extérieure (10) de l'appareil de travail (1), en particulier que les sections transversales d'écoulement (31, 32) sont délimitées par la paroi extérieure (10) de l'appareil de travail (1).

14. Appareil de travail portatif selon la revendication 12 ou la revendication 13, **caractérisé en ce que** l'appareil de travail (1) possède un fond (17) qui, dans la position de dépose, est tourné vers le plan horizontal, que l'appareil de travail (1) comporte un couvercle de boîtier (20) opposé au fond (17), que l'appareil de travail (1) comporte une surface latérale (21) qui relie le couvercle de boîtier (20) et le fond (17) l'un à l'autre et qui délimite l'appareil de travail (1) le long du sens longitudinal (50) dans une direction perpendiculaire au plan (E) d'outil, et que l'espace d'entrée (24), en particulier l'ouverture d'entrée (4), est disposé sur la surface latérale (21) de l'appareil de travail (1).
